# EUROPEAN PATENT APPLICATION

(11) **EP 4 756 267 A1**
(43) Date of publication of application: **10.06.2026**
(21) Application number: 24848357.0
(22) Date of filing: 01.08.2024
(51) Int. Cl.: F16K 3/26, F16K 3/314

(54) **VALVE STRUCTURE**

(30) Priority: 01.08.2023 CN 202322056487 U; 01.08.2023 CN 202322053165 U; 25.10.2023 CN 202311396678; 25.10.2023 CN 202322879771 U
(71) Applicant: Zhejiang Dunan Artificial Environment Co., Ltd., Shaoxing Zhejiang 311800 (CN)
(72) Inventor: LI, Kailong, Shaoxing, Zhejiang 311800 (CN); JIN, Ju, Shaoxing, Zhejiang 311800 (CN); WANG, Fugang, Shaoxing, Zhejiang 311800 (CN); FANG, Qidi, Shaoxing, Zhejiang 311800 (CN); JIN, Yong, Shaoxing, Zhejiang 311800 (CN); WANG, Shaobo, Shaoxing, Zhejiang 311800 (CN)
(74) Representative: Studio Torta S.p.A.
(86) International application number: PCT/CN2024/109271
(87) International publication number: WO 2025/026403

(57) **Abstract**

A valve structure, comprising a valve body (100), a valve core (200), and a sealing ring (300). The valve body (100) has a valve cavity (110); the valve cavity (110) is provided with a valve port (101); the valve core (200) is movably arranged in the valve cavity (110), and is used for adjustably sealing the valve port; a sealing groove (210) is formed in the valve core (200) in the circumferential direction; the sealing ring (300) is at least partially arranged in the sealing groove (210); and the part of the sealing ring (300) exposed out of the sealing groove (210) is in sealing fit with the valve port. A cavity is formed between the sealing groove (210) and the sealing ring (300); a balance channel is formed in the valve core (200); one end of the balance channel is communicated with the cavity, and the other end of the balance channel is communicated with the space outside the valve core (200) and in the valve body (100). The direction of the fluid acting force received by the part of the sealing ring (300) exposed out of the sealing groove (210) is opposite to that of the fluid acting force at the cavity received by the sealing ring (300). The valve structure can reduce or avoid the deformation of the sealing ring (300).

## Description

### CROSS-REFERENCE TO RELATED APPLICATIONS

The present disclosure claims priority to Chinese Application No. 202311396678.1, filed on October 25, 2023, Chinese Application No. 202322879771.X, filed on October 25, 2023, Chinese Application No. 202322053165.2, filed on August 1, 2023, and Chinese Application No. 202322056487.2, filed on August 1, 2023, which are incorporated herein by reference in their entirety or in part.

### TECHNICAL FIELD

The present disclosure relates to the technical field of valves and, in particular, to a valve structure.

### BACKGROUND

A valve core of an existing valve structure is circumferentially provided with a sealing ring, and the sealing ring is configured to seal the valve core to a valve port of a valve body. However, during action of the valve core along with the valve structure, or in a closed state of the valve core, a high-pressure fluid entering a valve chamber acts on the sealing ring of the valve core, such that the sealing ring is subjected to a squeezing force, causing compression and deformation of the sealing ring, thereby leading to a serious internal leakage problem of the valve structure.

### SUMMARY

A main objective of the present disclosure is to overcome at least one defect of the related art by providing a valve structure, which is less prone to internal leakage.

To achieve the above objective, the present disclosure adopts the following technical solutions.

According to an aspect of the present disclosure, a valve structure is provided, including a valve body, a valve core, and a sealing ring. The valve body has a valve chamber, the valve chamber has a valve port, the valve core is movably disposed in the valve chamber and configured to adjustably seal the valve port, the valve core is provided with a sealing groove in a circumferential direction, the sealing ring is at least partially disposed in the sealing groove, and a part of the sealing ring exposed out of the sealing groove is in sealing fit with the valve port. A cavity is formed between the sealing groove and the sealing ring, a balance channel is provided in the valve core, one end of the balance channel is in communication with the cavity, and the other end is in communication with a space outside the valve core and in the valve body. A direction of a force exerted on the part of the sealing ring exposed out of the sealing groove by a fluid is opposite to a direction of a force exerted on the sealing ring by the fluid at the cavity.

According to an embodiment of the present disclosure, the sealing groove has an upper groove wall, the cavity includes a first cavity formed between the upper groove wall and an upper surface of the sealing ring, the balance channel includes a first balance channel, and the first balance channel is in communication with the first cavity and an area of the valve chamber located above the sealing ring; and/or the sealing groove has a lower groove wall, the cavity includes a second cavity formed between the lower groove wall and a lower surface of the sealing ring, the balance channel includes a second balance channel, and the second balance channel is in communication with the second cavity and an area of the valve chamber located below the sealing ring.

According to an embodiment of the present disclosure, the sealing groove has the upper groove wall and the lower groove wall, and the balance channel includes the first balance channel and the second balance channel. In a radial direction of the valve body, a width of the upper groove wall is greater than a width of the lower groove wall, and a width of an opening of the first balance channel on the upper groove wall is greater than or equal to a width of an opening of the second balance channel on the lower groove wall.

According to an embodiment of the present disclosure, the sealing groove has the upper groove wall, the balance channel includes the first balance channel, and the valve core is provided with at least two first balance channels, the at least two first balance channels being evenly spaced in the circumferential direction of the valve core.

According to an embodiment of the present disclosure, the sealing groove has the lower groove wall, the balance channel includes the second balance channel, and the lower groove wall is provided with at least two second balance channels, the at least two second balance channels being evenly spaced in the circumferential direction of the valve core.

According to an embodiment of the present disclosure, the sealing groove has the upper groove wall, the balance channel includes the first balance channel, the first balance channel is a through hole; or the first balance channel is a through groove, a plane where the upper groove wall is located is taken as a reference plane, and an orthographic projection of the through groove on the reference plane is arc-shaped.

According to an embodiment of the present disclosure, the sealing groove has the lower groove wall, the balance channel includes the second balance channel, the second balance channel is a through hole; or the second balance channel is a through groove, a plane where the lower groove wall is located is taken as a reference plane, and an orthographic projection of the through groove on the reference plane is arc-shaped.

According to an embodiment of the present disclosure, the sealing groove has the upper groove wall, the cavity includes the first cavity, the upper surface of the sealing ring is provided with a first groove, and the first groove and the upper groove wall together form the first cavity.

According to an embodiment of the present disclosure, the upper surface of the sealing ring is provided with one first groove, the first groove is shaped as a closed circular ring, and each first balance channel is configured to overlap with the first groove.

According to an embodiment of the present disclosure, the sealing groove has the lower groove wall, the cavity includes the second cavity, the upper surface of the sealing ring is provided with a second groove, and the second groove and the lower groove wall together form the second cavity.

According to an embodiment of the present disclosure, the lower surface of the sealing ring is provided with one second groove, the second groove is shaped as a closed circular ring, and each second balance channel is configured to overlap with the second groove.

According to an embodiment of the present disclosure, the valve core is of an integral structure.

According to an embodiment of the present disclosure, the valve core includes a piston and a pressing sleeve, the pressing sleeve is connected to a lower end of the piston, the piston is provided with a first boss in the circumferential direction, the pressing sleeve is provided with a second boss in the circumferential direction, and the first boss and the second boss are spaced apart in an axial direction; a space between the first boss and the second boss forms the sealing groove, a lower surface of the first boss is an upper groove wall of the sealing groove, and an upper surface of the second boss is a lower groove wall of the sealing groove.

Based on the above technical solutions, the valve structure according to the present disclosure has the following advantages and positive effects.

The valve structure according to the present disclosure includes the valve body, the valve core, and the sealing ring; the valve core is provided with the sealing groove in the circumferential direction; the sealing ring is at least partially disposed in the sealing groove; the cavity is formed between the sealing groove and the sealing ring; the valve core is provided with the balance channel; one end of the balance channel is in communication with the cavity, and the other end is in communication with the valve chamber. Through the above design, the present disclosure can utilize the balance channel to divert the fluid in the valve chamber to an upper part and/or a lower part of the sealing ring, such that the sealing ring is subjected to diversion pressure and hence is squeezed towards two sides in the circumferential direction in an area of the sealing ring close to the valve port. Consequently, an outer area of the sealing ring resists the squeezing arising from a pressure difference, and forces on the sealing ring tend to be balanced, which is conducive to reducing or avoiding deformation of the sealing ring and improving sealing performance of the valve structure.

### BRIEF DESCRIPTION OF THE DRAWINGS

FIG. 1 is a perspective view of a valve structure according to an exemplary embodiment;
FIG. 2 is an axonometric sectional view of the valve structure shown in FIG. 1;
FIG. 3 is an enlarged view of part A in FIG. 2;
FIG. 4 is a schematic view of force indicators in FIG. 3;
FIG. 5 is a perspective view of a valve core shown in FIG. 2;
FIG. 6 is a perspective exploded view of the valve core shown in FIG. 5;
FIG. 7 is an axonometric sectional view of the valve core shown in FIG. 5;
FIGS. 8 and 9 are perspective views of a sealing ring shown in FIG. 2 from two different angles of view, respectively;
FIG. 10 is a perspective exploded view of a valve core of a valve structure according to another exemplary embodiment;
FIG. 11 is an axonometric sectional view of a valve core of a valve structure according to another exemplary embodiment;
FIGS. 12 and 13 are partial enlarged sectional views of valve structures according to two other exemplary embodiments, respectively;
FIG. 14 is a partial enlarged view of an axonometric sectional structure of a valve structure according to another exemplary embodiment;
FIG. 15 is a perspective view of a valve core of the valve structure shown in FIG. 14;
FIG. 16 is a perspective exploded view of the valve core shown in FIG. 15;
FIGS. 17 to 21 are partial sectional views of valve structures according to several other exemplary embodiments, respectively.
FIG. 22 is a sectional view of a valve structure according to another exemplary embodiment with a valve needle spring in a natural state;
FIG. 23 is a schematic view of the valve structure shown in FIG. 22 with the valve needle spring in the natural state;
FIG. 24 is a sectional view of the valve structure shown in FIG. 22 with the valve needle spring in a compressed state;
FIG. 25 is a schematic view of the valve structure shown in FIG. 22 with the valve needle spring in the compressed state;
FIG. 26 is a sectional view of a valve structure according to another exemplary embodiment with a valve needle spring in a natural state;
FIG. 27 is a schematic view of the valve structure shown in FIG. 26 with the valve needle spring in the natural state;
FIG. 28 is a sectional view of the valve structure shown in FIG. 26 with the valve needle spring in a compressed state;
FIG. 29 is a schematic view of the valve structure shown in FIG. 26 with the valve needle spring in the compressed state.

### Reference numerals:

100 valve body; 101 valve port; 110 valve chamber; 200 valve core; 201 piston; 2011 first boss; 2012 step structure; 202 pressing sleeve; 2021 second boss; 203 boss; 204 first positioning structure; 210 sealing groove; 211 upper groove wall; 212 lower groove wall; 221 first balance channel; 222 second balance channel; 300 sealing ring; 301 first surface; 302 second surface; 303 second positioning structure; 310 first groove; 320 second groove; f1 squeezing force; f2 squeezing force; f3 squeezing force; C1 first cavity; C2 second cavity; S1 area; S2 area; W1 width; W2 width; W3 width; W4 width; X axial direction; 10a valve housing; 11a accommodating chamber; 12a valve port; 13a valve seat; 14a valve body; 15a valve cover; 20a nut sleeve; 21a first through hole; 211a threaded segment; 212 guiding segment; 30a screw; 40a valve core; 41a spring sleeve; 42a body; 421a connecting end; 4211a connecting protrusion; 422a blocking end; 423a annular recess; 424a annular sealing ring; 43a bearing; 44a connecting member; 45a buffer spring; 50a valve needle spring; 60a guiding ring; 70a accommodating structure; 71a first accommodating groove; 711a guiding portion; 712a accommodating portion.

### DETAILED DESCRIPTION

Exemplary embodiments will now be described more fully with reference to the accompanying drawings. However, exemplary embodiments may be embodied in many forms and should not be construed as limiting the embodiments set forth herein; on the contrary, these embodiments are provided such that the present disclosure will be thorough and complete, and will fully convey a concept of exemplary embodiments to those skilled in the art. The same reference numerals in the drawings denote the same or similar structures, and thus their detailed descriptions will be omitted.

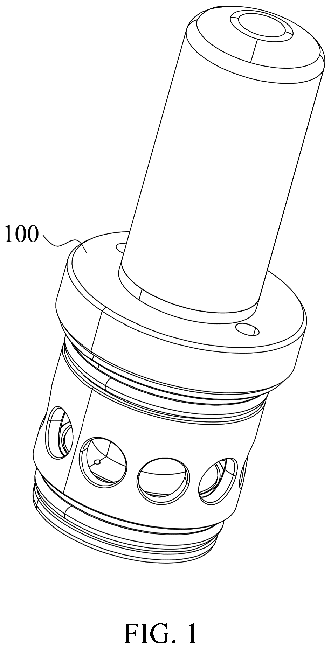

Referring to FIG. 1, it representatively shows a perspective view of a valve structure according to the present disclosure. In this exemplary embodiment, the valve structure according to the present disclosure is described by an example where the valve structure is applied to a vehicle thermal management system. It can be easily understood for those skilled in the art that various modifications, additions, substitutions, deletions or other changes may be made to the following specific embodiments to apply relevant designs of the present disclosure to other types or application scenarios of valve structures, and these changes still fall within the scope of the principles of the valve structure according to the present disclosure.

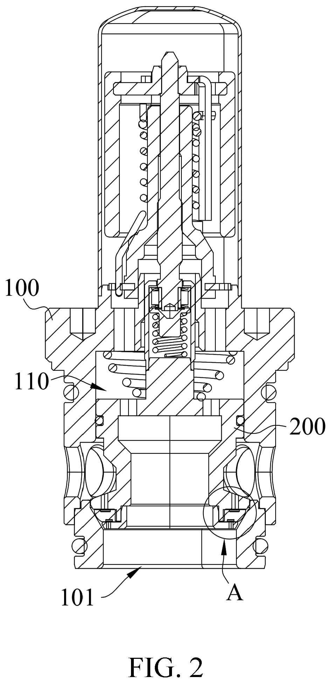

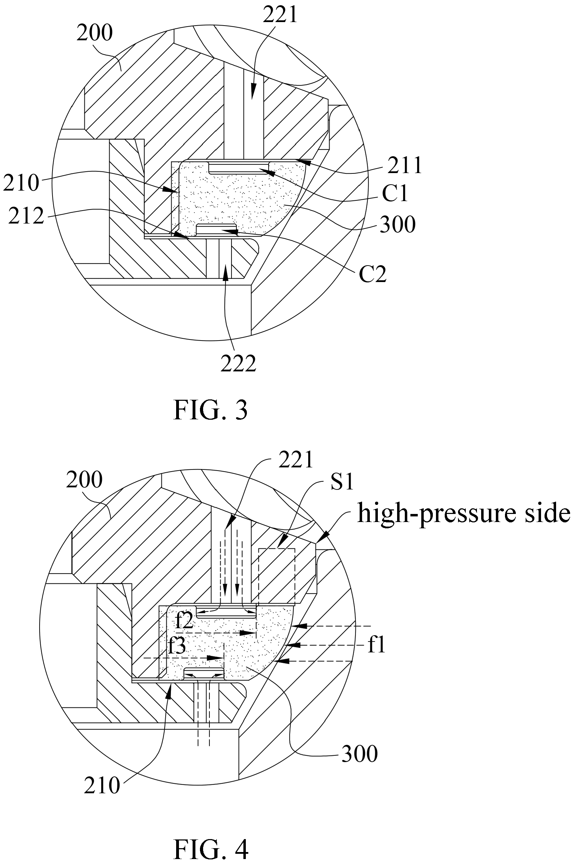

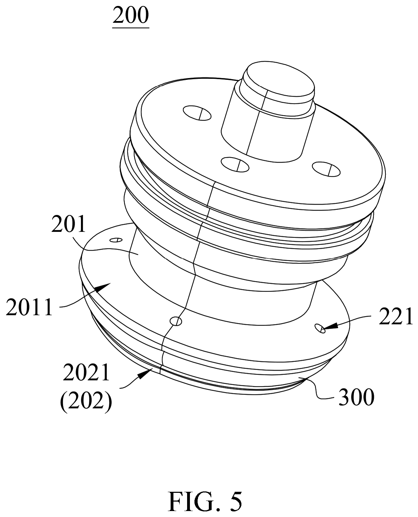

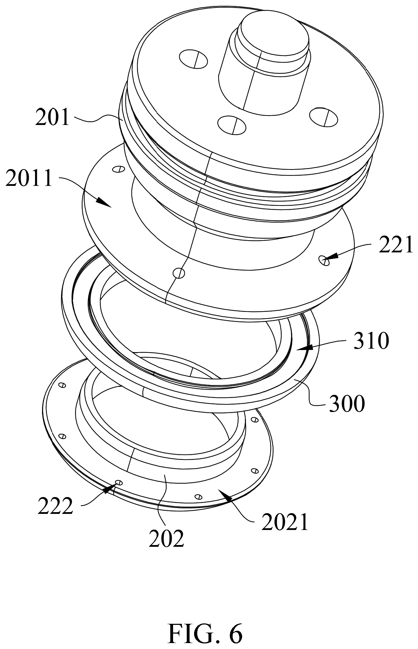

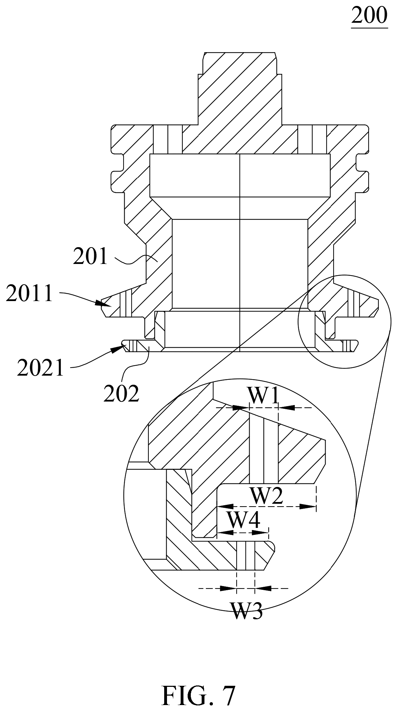

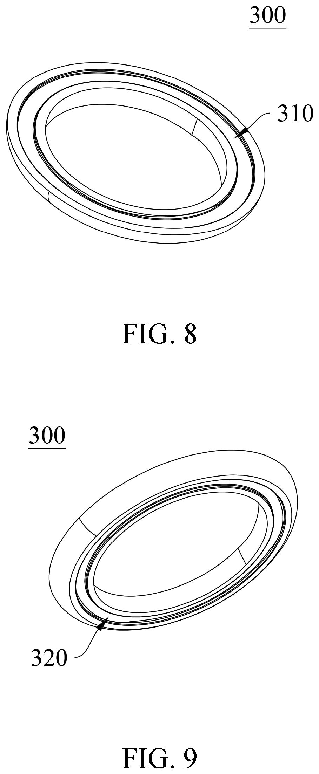

As shown in FIG. 1, in an embodiment of the present disclosure, the valve structure according to the present disclosure includes a valve body 100, a valve core 200, and a sealing ring 300. The valve body 100 has a valve chamber 110, and the valve chamber 110 has a valve port. For instance, taking a structure shown in FIGS. 1 and 2 as an example, when the valve port is located at a lower end of the valve structure, the valve port may be understood as a lower port of the valve chamber 110, that is, the entire space above the valve port is the valve chamber 110. The valve core 200 is movably disposed in the valve chamber 110, and the valve core 200 can move up and down in an axial direction in the valve chamber 110 to adjustably seal the valve port. The valve core 200 is provided with a sealing groove 210 in a circumferential direction, the sealing ring 300 is at least partially disposed in the sealing groove 210, and a part of the sealing ring 300 exposed out of the sealing groove 210 is in sealing fit with the valve port. For example, when the valve structure is in a closed state of the valve port, the part of the sealing ring 300 exposed out of the sealing groove 210 abuts against a chamber wall of the valve chamber 110. Referring to FIG. 2 to FIG. 9, FIG. 2 representatively shows an axonometric sectional view of the valve structure; FIG. 3 representatively shows an enlarged view of part A in FIG. 2; FIG. 4 is a schematic view of force indicators in FIG. 3; FIG. 5 representatively shows a perspective view of the valve core 200; FIG. 6 representatively shows a perspective exploded view of the valve core 200; FIG. 7 representatively shows an axonometric sectional view of the valve core 200; and FIGS. 8 and 9 can representatively show perspective views of the sealing ring 300 viewed from two different angles of view, respectively. The structures, connection modes and functional relationships of main components of the valve structure according to the present disclosure will be described in detail below with reference to the above drawings.

As shown in FIG. 1 to FIG. 3, in an embodiment of the present disclosure, a cavity is formed between the sealing groove 210 and the sealing ring 300, a balance channel is formed in the valve core 200, one end of the balance channel is in communication with the cavity, and the other end of the balance channel is in communication with the valve chamber 110 of the valve body 100. Accordingly, force exerted on the sealing ring 300 by a fluid diverted to the cavity includes an outward squeezing force; force exerted on a periphery of the sealing ring 300 by the fluid in the valve chamber 110 includes an inward squeezing force; and the outward squeezing force and the inward squeezing force are in opposite directions and at least partially counteract each other. Through the above design, the present disclosure can utilize the balance channel to divert the fluid in the valve chamber 110 into the cavity formed between the sealing groove 210 and the sealing ring 300, such that the sealing ring 300 is subjected to diversion pressure and hence is squeezed towards two sides in a circumferential direction in an area of the sealing ring 300 close to the valve port. Consequently, an outer area of the sealing ring 300 resists the squeezing arising from a pressure difference, and forces on the sealing ring 300 tend to be balanced, which is conducive to reducing or avoiding deformation of the sealing ring 300 and improving sealing performance of the valve structure.

As shown in FIG. 1 to FIG. 3, in an embodiment of the present disclosure, the sealing groove 210 has an upper groove wall 211 and a lower groove wall 212 arranged opposite to each other. The cavity includes a first cavity C1 and a second cavity C2, the first cavity C1 is formed between the upper groove wall 211 and an upper surface of the sealing ring 300, and the second cavity C1 is formed between the lower groove wall 212 and a lower surface of the sealing ring 300. The balance channel includes a first balance channel 221 and a second balance channel 222. The first balance channel 221 is in communication with the first cavity C1 and an area of the valve chamber 110 located above the sealing ring 300, i.e., one end of the first balance channel 221 is opened at the upper groove wall 211, and the other end of the first balance channel 221 is opened at an area of a surface of the valve core 200 located above the sealing groove 210 and is in communication with a space outside the valve core 200 and in the valve body 100 (for example, an area of the valve chamber 110 located above the valve core 200). The second balance channel 222 is in communication with the second cavity C2 and an area of the valve chamber 110 located below the sealing ring 300, that is, one end of the second balance channel 222 is opened at the lower groove wall 212, and the other end of the second balance channel 222 is opened at an area of the surface of the valve core 200 located below the sealing groove 210 and is in communication with the space outside the valve core 200 and in the valve body 100 (for example, an area of the valve chamber 110 located below the valve core 200, such as at the valve port). Accordingly, a direction of a force exerted on the part of the sealing ring 300 exposed out of the sealing groove 210 by the fluid (referring to a squeezing force f1 shown in FIG. 4) is opposite to a direction of a force exerted on the sealing ring 300 by the fluid at the cavity (referring to a squeezing force f2 and a squeezing force f3 shown in FIG. 4). Through the above design, the present disclosure can use the first balance channel 221 and the second balance channel 221 to realize diversion at an upper part and a lower part of the sealing ring 300, thereby further enhancing resistance of the outer area of the sealing ring 300 against the pressure difference, resulting in more balanced force distribution across the sealing ring 300, further reducing or avoiding the deformation of the sealing ring 300, and further improving the sealing performance of the valve structure.

Specifically, as shown in FIG. 4, FIG. 4 specifically shows force distribution on the sealing ring 300 when the area of the valve chamber 110 located above the sealing ring 300 is a high-pressure area. An outer side of the sealing ring 300 is subjected to an inward squeezing force f1 under the action of the above pressure difference force. Due to the existence of the first balance channel 221, a middle area of the sealing ring 300 (for example, the upper surface) is subjected to an outward squeezing force f2 under the action of the diversion pressure. Due to the existence of the second balance channel 222, a middle area of the sealing ring 300 (for example, the lower surface) is subjected to an outward squeezing force f3 under the action of the diversion pressure. At this time, squeezing forces f1, f2 on inner and outer sides of an area S1 at a top of the sealing ring 300 at least partially counteract each other, and squeezing forces f3, f1 of inner and outer sides of an area S2 at a bottom of the sealing ring 300 at least partially counteract each other, so that the forces in the area S1 and the area S2 of the sealing ring 300 tend to be balanced, thereby avoiding the deformation of the sealing ring 300 or reducing the deformation of the sealing ring 300. In some embodiments, the area of the valve chamber 110 below the sealing ring 300 may also be a high-pressure area. In this case, the periphery of the sealing ring 300 is also subjected to an inward squeezing force, and an outward squeezing force generated by a part of the fluid diverted into the cavity between the sealing ring 300 and the sealing groove 210 through the balance channel can at least partially counteract the inward squeezing force, thereby avoiding deformation of the sealing ring 300 or reducing the deformation of the sealing ring 300.

As shown in FIG. 7, in an embodiment of the present disclosure, in a radial direction of the valve body 100 (for example, a horizontal direction in the drawings), a ratio of a width W1 of an opening of the first balance channel 221 on the upper groove wall 211 to a width W2 of the upper groove wall 211 may be from 1/10 to 1/2, such as 1/10, 1/8, 1/5, 1/3, 1/2, etc. Through the above design, the present disclosure can prevent the width ratio of the opening of the first balance channel 221 to the upper groove wall 211 from being too large, thereby leaving enough area for the contact between the upper groove wall 211 and the upper surface of the sealing ring 300, and ensuring the sealing effect of the sealing ring 300. Moreover, the present disclosure can prevent the width ratio of the opening of the first balance channel 221 to the upper groove wall 211 from being too small, such that the first balance channel 221 provides sufficient diversion and thus provides sufficient squeezing force on the middle area of the upper surface of the sealing ring 300 to counteract the squeezing force on the outer side, thereby further alleviating the deformation problem of the sealing ring 300. In some embodiments, the ratio of the width W1 of the opening of the first balance channel 221 on the upper groove wall 211 to the width W2 of the upper groove wall 211 may also be less than 1/10, or may be greater than 1/2, such as 10/101, 51/100, etc., which is not limited to this embodiment.

As shown in FIG. 7, in an embodiment of the present disclosure, in the radial direction of the valve body 100 (for example, the horizontal direction in the drawings), a ratio of the width W3 of the opening of the second balance channel 222 on the lower groove wall 212 to a width W4 of the upper groove wall 211 may be 1/10 to 1/2, such as 1/10, 1/8, 1/5, 1/3, 1/2, etc. Through the above design, the present disclosure can prevent the width ratio of the opening of the second balance channel 222 to the lower groove wall 212 from being too large, thereby leaving enough area for the contact between the lower groove wall 212 and the lower surface of the sealing ring 300, and ensuring the sealing effect of the sealing ring 300. Moreover, the present disclosure can prevent the width ratio of the opening of the second balance channel 222 to the lower groove wall 212 from being too small, such that the second balance channel 222 provides sufficient diversion and thus provides sufficient squeezing force on the middle area of the lower surface of the sealing ring 300 to counteract the squeezing force on the outer side, thereby further alleviating the deformation problem of the sealing ring 300. In some embodiments, the ratio of the width W3 of the opening of the second balance channel 222 on the lower groove wall 212 to the width W4 of the lower groove wall 212 may also be less than 1/10, or may be greater than 1/2, such as 10/101, 51/100, etc., which is not limited to this embodiment.

As shown in FIG. 7, in an embodiment of the present disclosure, in the radial direction of the valve body 100, the width W2 of the upper groove wall 211 is greater than the width W4 of the lower groove wall 212, for example, the sealing groove 210 may have a trapezoidal sectional shape in the axonometric sectional view. On this basis, the width W1 of the opening of the first balance channel 221 on the upper groove wall 211 may be greater than or equal to the width W3 of the opening of the second balance channel 222 on the lower groove wall 212. Through the above design, in the present disclosure, the upper and lower sides of the sealing ring 300 may be subjected to more balanced squeezing forces due to the diversion of the balance channels, thereby further avoiding the deformation of the sealing ring 300.

The valve core 200 may be provided with at least one first balance channel 221. In some embodiments, the valve core 200 may also be provided with at least two first balance channels 221. As shown in FIGS. 5 and 6, in an embodiment of the present disclosure, the valve core 200 may be provided with four first balance channels 221, and these first balance channels 221 are evenly spaced in a circumferential direction of the valve core 200. Through the above design, the present disclosure can make the squeezing force applied to the upper part of the sealing ring 300 due to the diversion of the first balance channel 221 more uniform in the circumferential direction, thereby further avoiding the deformation of the sealing ring 300. In some embodiments, the valve core 200 may also be provided with two, three, five, or more than five first balance channels 221, which is not limited to this embodiment.

The valve core 200 may be provided with at least one second balance channel 222. In some embodiments, the valve core 200 may also be provided with at least two second balance channels 222. As shown in FIG. 6, in an embodiment of the present disclosure, the valve core 200 may be provided with eight second balance channels 222, and the second balance channels 222 are evenly spaced in the circumferential direction of the valve core 200. Through the above design, the present disclosure can make the squeezing force applied to the lower part of the sealing ring 300 due to the diversion of the second balance channel 222 more uniform in the circumferential direction, thereby further avoiding the deformation of the sealing ring 300. In some embodiments, the valve core 200 may also be provided with two, three, five, or more than five second balance channels 222, which is not limited to this embodiment.

As shown in FIGS. 5 and 6, in an embodiment of the present disclosure, the first balance channel 221 may be a through hole, for example but not limited to a circular hole, an elliptical hole, a rectangular hole, etc. Through the above design, the present disclosure can make the first balance channel 221 easier to process and have less influence on the structure of the valve core 200.

As shown in FIG. 6, in an embodiment of the present disclosure, the second balance channel 222 may be a through hole, for example but not limited to a circular hole, an elliptical hole, a rectangular hole, etc. Through the above design, the present disclosure can make the second balance channel 222 easier to process and have less influence on the structure of the valve core 200.

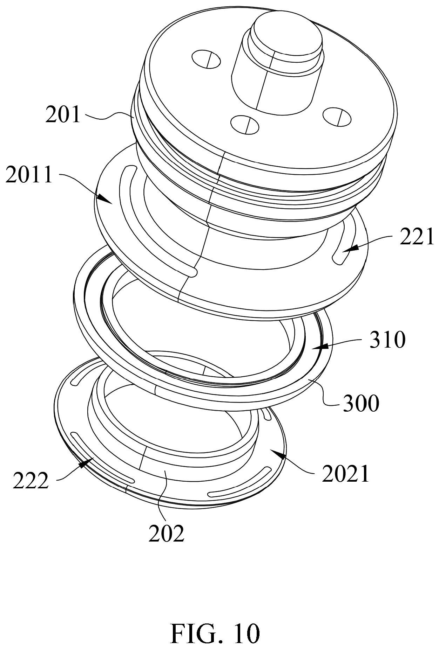

Referring to FIG. 10, FIG. 10 representatively shows a perspective view of the valve core 200 of the valve structure capable of embodying the principles of the present disclosure in another exemplary embodiment.

As shown in FIG. 10, in an embodiment of the present disclosure, the first balance channel 221 may be a through groove. A plane where the groove wall 211 is located is taken as a reference plane, and the through groove may be arc-shaped on the reference plane. For example, taking the sealing groove 210 of a circular ring shape as an example, an arc corresponding to each through groove may match with a curvature of one segment of the circular ring shape corresponding to the sealing ring. Through the above design, the present disclosure can expand a diversion area of the first balance channel 221, and optimize a squeezing effect on the middle area of the upper surface of the sealing ring 300, thereby further avoiding the deformation of the sealing ring 300.

As shown in FIG. 10, in an embodiment of the present disclosure, the second balance channel 222 may be a through groove. A plane where the lower groove wall 212 is located is taken as a reference plane, and the through groove may be arc-shaped on the reference plane. For example, taking the sealing groove 210 of a circular ring shape as an example, an arc corresponding to each through groove may match with the curvature of one segment of the circular ring shape corresponding to the sealing ring. Through the above design, the present disclosure can expand a diversion area of the second balance channel 222, and optimize the squeezing effect on the middle area of the lower surface of the sealing ring 300, thereby further avoiding the deformation of the sealing ring 300.

As shown in FIG. 7, in an embodiment of the present disclosure, the valve core 200 may include a piston 201 and a pressing sleeve 202, and the pressing sleeve 202 is connected to a lower end of the piston 201, for example, partially sleeved in a bottom opening of the piston 201. On this basis, the piston 201 is provided with a first boss 2011 in the circumferential direction, the pressing sleeve 202 is provided with a second boss 2021 in the circumferential direction, and the first boss 2011 and the second boss 2021 are spaced apart in the axial direction, for example, spaced apart in an up-down direction shown in the drawings. On this basis, a space between the first boss 2011 and the second boss 2021 forms the above sealing groove 210 of the valve core 200, and a lower surface of the first boss 2011 is the upper groove wall 211 of the sealing groove 210, and an upper surface of the second boss 2021 is the lower groove wall 212 of the sealing groove 210.

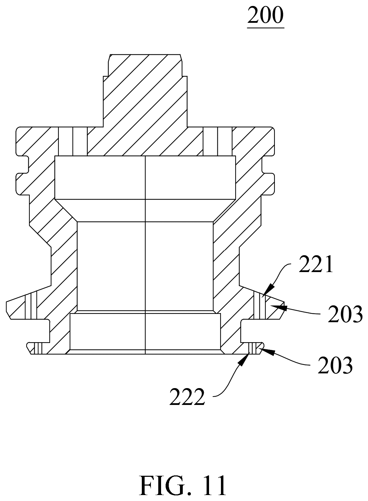

Referring to FIG. 11, FIG. 11 representatively shows an axonometric sectional view of the valve core 200 of the valve structure capable of embodying the principles of the present disclosure in another exemplary embodiment.

As shown in FIG. 11, in an embodiment of the present disclosure, the valve core 200 may be of an integral structure. For example, two bosses 203 spaced apart in the axial direction may be provided in the circumferential direction of the valve core 200 with the integral structure, and a space between the two bosses 203 forms the above sealing groove 210 of the valve core 200.

As shown in FIGS. 3 and 8, in an embodiment of the present disclosure, the upper surface of the sealing ring 300 may be provided with a first groove 310. Accordingly, the first groove 310 and the upper groove wall 211 of the sealing groove 210 together form the first cavity C1, and the opening of the first balance channel 221 at the upper groove wall 211 at least partially overlaps with the first groove 310, i.e., realizing communication between the first balance channel 221 and the first cavity C1. Through the above design, the present disclosure can use the first groove 310 to make the upper surface of the sealing ring 300 more fully subjected to the squeezing force under the diversion action.

As shown in FIG. 8, based on a design in which the upper surface of the sealing ring 300 is provided with the first groove 310, in an embodiment of the present disclosure, the upper surface of the sealing ring 300 may be provided with only one first groove 310, the first groove 310 may be shaped as a closed circular ring, i.e., the first cavity C1 may be shaped as a closed circular ring, and each first balance channel 221 overlaps with the first groove 310. In some embodiments, the upper surface of the sealing ring 300 may also be provided with a plurality of first grooves 310, and positions of the plurality of first grooves 310 may be respectively arranged corresponding to positions of the plurality of first balance channels 221.

Based on the design in which the upper surface of the sealing ring 300 is provided with the first groove 310, in an embodiment of the present disclosure, in the radial direction of the valve body 100 (for example, the horizontal direction in the drawings), a ratio of a width of the first groove 310 to a width of the upper surface of the sealing ring 300 may be from 1/10-1/2, such as 1/10, 1/8, 1/5, 1/3, 1/2, etc. Through the above design, the present disclosure can prevent the width ratio of the opening of the first groove 310 to the upper surface of the sealing ring 300 from being too large, thereby leaving enough area for the contact between the upper groove wall 211 and the upper surface of the sealing ring 300, and ensuring the sealing effect of the sealing ring 300. In some embodiments, the ratio of the width of the first groove 310 to the width of the upper surface of the sealing ring 300 may also be less than 1/10, or may be greater than 1/2, such as 10/101, 51/100, etc., which is not limited to this embodiment.

As shown in FIG. 3, based on the design in which the upper surface of the sealing ring 300 is provided with the first groove 310, in an embodiment of the present disclosure, a plane where the upper surface of the sealing ring 300 is located is taken as a reference plane, and on the reference plane, an orthographic projection of the opening of the first balance channel 221 on the upper groove wall 211 may be entirely located in the first groove 310. Further, a width of the first groove 310 in the radial direction may be slightly greater than a width of the opening of the first balance channel 221 on the upper groove wall 211. Through the above design, the present disclosure can enable the diversion of the first balance channel 211 to generate more effective squeezing force on the sealing ring 300 at the first groove 310.

As shown in FIGS. 3 and 9, in an embodiment of the present disclosure, the lower surface of the sealing ring 300 may be provided with a second groove 320. Accordingly, the second groove 320 and the lower groove wall 212 of the sealing groove 210 together form the second cavity C2, and the opening of the second balance channel 222 on the lower groove wall 212 at least partially overlaps with the second groove 320, i.e., realizing communication between the second balance channel 222 and the second cavity C2. Through the above design, the present disclosure can use the second groove 320 to make the lower surface of the sealing ring 300 more fully subjected to the squeezing force under the diversion action.

As shown in FIG. 9, based on a design in which the lower surface of the sealing ring 300 is provided with the second groove 320, in an embodiment of the present disclosure, the lower surface of the sealing ring 300 may be provided with only one second groove 320, the second groove 320 may be shaped as a closed circular ring, i.e., the second cavity C2 may be shaped as a closed circular ring, and each second balance channel 222 overlaps with the second groove 320. In some embodiments, the lower surface of the sealing ring 300 may also be provided with a plurality of second grooves 320, and positions of the plurality of second grooves 320 may be respectively arranged corresponding to the positions of the plurality of second balance channels 222.

Based on the design in which the lower surface of the sealing ring 300 is provided with the second groove 320, in an embodiment of the present disclosure, in the radial direction (for example, the horizontal direction in the drawings) of the valve body 100, a ratio of a width of the second groove 320 to a width of the lower surface of the sealing ring 300 may be from 1/10-1/2, such as 1/10, 1/8, 1/5, 1/3, 1/2, etc. Through the above design, the present disclosure can prevent the width ratio of the opening of the second groove 320 to the lower surface of the sealing ring 300 from being too large, leaving enough area for the contact between the lower groove wall 212 and the lower surface of the sealing ring 300, and ensuring the sealing effect of the sealing ring 300. In some embodiments, the ratio of the width of the second groove 320 to the width of the lower surface of the sealing ring 300 may also be less than 1/10, or may be greater than 1/2, such as 10/101, 51/100, etc., which is not limited to this embodiment.

As shown in FIG. 3, based on the design in which the lower surface of the sealing ring 300 is provided with the second groove 320, in an embodiment of the present disclosure, a plane where the lower surface of the sealing ring 300 is located is taken as a reference plane, and on the reference plane, an orthographic projection of the second balance channel 222 on the opening of the lower groove wall 212 may be entirely located in the second groove 320. Further, the width of the second groove 320 in the radial direction may be slightly greater than the width of the opening of the second balance channel 222 on the lower groove wall 212. Through the above design, the present disclosure can make the diversion of the second balance channel 212 generate more effective squeezing force on the sealing ring 300 at the second groove 320.

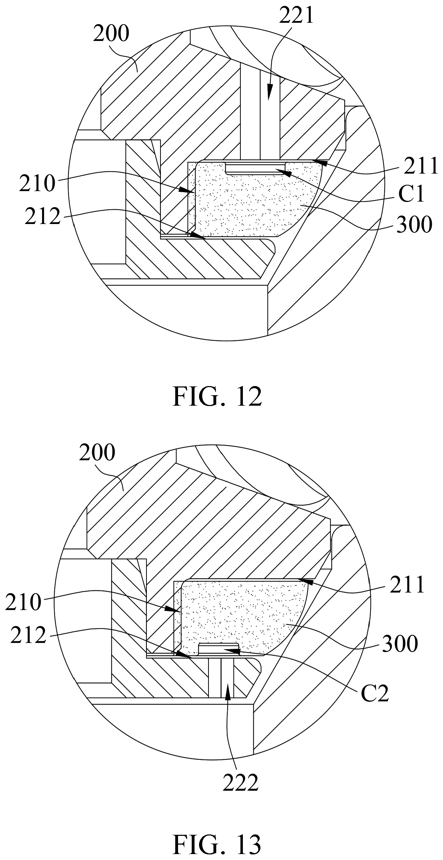

Referring to FIG. 12, FIG. 12 representatively shows a partial enlarged sectional view of the valve structure capable of embodying the principles of the present disclosure in another exemplary embodiment.

As shown in FIG. 12, in an embodiment of the present disclosure, the valve core 200 may be provided with the first balance channel 221 alone, that is, the second groove wall 212 of the sealing groove 210 is not provided with any balance channel.

Referring to FIG. 13, FIG. 13 representatively shows a partial enlarged sectional view of the valve structure capable of embodying the principles of the present disclosure in another exemplary embodiment.

As shown in FIG. 13, in an embodiment of the present disclosure, the valve core 200 may be provided with the second balance channel 222 alone, that is, the first groove wall 211 of the sealing groove 210 is not provided with any balance channel.

As described above, in various possible embodiments consistent with the design concept of the present disclosure, the valve core 200 is provided with a balance channel on at least one of the first groove wall 211 or the second groove wall 212 of the sealing groove 210.

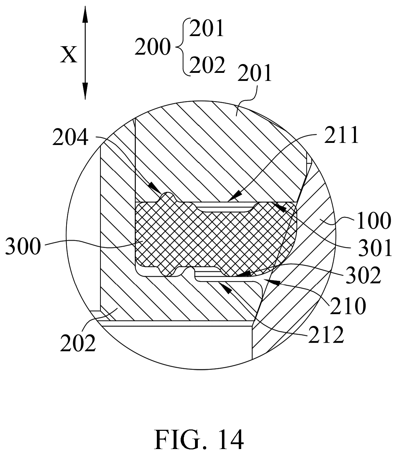

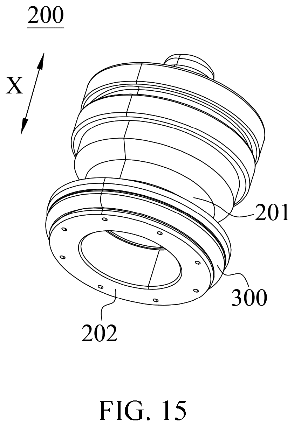

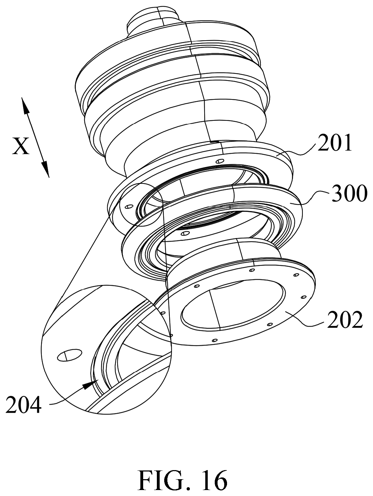

Referring to FIGS. 14 to 16, FIG. 14 representatively shows a partial enlarged view of an axonometric sectional structure of the valve structure in another exemplary embodiment; FIG. 15 representatively shows a perspective view of the valve core 200; and FIG. 16 representatively shows a perspective exploded view of the valve core 200. The structures, connection modes and functional relationships of main components of the valve structure according to the present disclosure will be described in detail below with reference to the above drawings.

As shown in FIGS. 1 to 16, in an embodiment of the present disclosure, the valve body 100 has a valve chamber and a valve port 101, the valve core 200 is movably disposed in the valve chamber of the valve body 100, and the valve core 200 is configured to adjustably seal the valve port 101 of the valve body 100 (referring to FIG. 2). The valve core 200 is provided with a sealing groove 210 in a circumferential direction, the sealing ring 300 is at least partially disposed in the sealing groove 210, and a part of the sealing ring 300 exposed out of the sealing groove 210 is in sealing fit with the valve port 101. On this basis, the sealing groove 210 has an upper groove wall 211 and a lower groove wall 212 spaced apart from each other, which may be specifically, for example, spaced apart in an axial direction X of the valve body 100. At least one of the upper groove wall 211 or the lower groove wall 212 is provided with a first positioning structure 204, and the first positioning structure 204 is configured as at least one of a protrusion or a groove. Through the above structural design, the present disclosure can use the first positioning structure 204 to position the sealing ring 300, which may be specifically positioned along the radial direction, thereby ensuring that the sealing ring 300 is more firmly assembled to the sealing groove 210 of the valve core 200, avoiding a risk of loosening and detachment of the sealing ring 300, and guaranteeing the sealing effectiveness of the valve structure.

It should be noted that, in the embodiments shown in FIGS. 14 to 16, a structural design in which the groove wall 211 is provided with the first positioning structure 204 and the first positioning structure 204 is a groove is taken as an example for illustration. It should be understood that, in some embodiments, when the upper groove wall 211 is provided with the first positioning structure 204, the first positioning structure 204 may also be a protrusion. Moreover, regardless of whether the upper groove wall 211 is provided with the first positioning structure 204, the lower groove wall 212 may be selectively provided with the first positioning structure 204, and the first positioning structure 204 disposed on the lower groove wall 212 may be a groove or a protrusion, which is not limited to this embodiment.

**It** should be noted that, when at least one of the upper groove wall 211 or the lower groove wall 212 is provided with the first positioning structure 204, since the sealing ring 300 is in a squeezed state when assembled with the sealing groove 210, when the first positioning structure 204 is a groove, a part of the squeezed sealing ring 300 will be deformed and compressed into the groove, i.e., the sealing ring 300 generates a bump corresponding to the groove, thereby realizing the relative positioning of the sealing ring 300 and the sealing groove 210. Alternatively, when the first positioning structure 204 is a protrusion, the protrusion may further squeeze the sealing ring 300, and certainly, a corresponding surface (the first surface 301 or the second surface 302) of the sealing ring 300 may be squeezed by the protrusion to form a recess. It should be understood that the above squeezing deformation state may be understood by observing the sectional structure represented by FIG. 14, however during actual disassembly, when the sealing ring 300 is made of a material with certain elastic recovery performance such as rubber, it is probably impossible to observe obvious bumps or recesses from the sealing ring 300 disassembled from the sealing groove 210, but only shallow bumps or depressions, or even no obvious marks may be observed.

As shown in FIG. 16, in an embodiment of the present disclosure, the first positioning structure 204 may be an annular structure. For example, the first positioning structure 204 is disposed on the upper groove wall 211 and the first positioning structure 204 is a groove, and the first positioning structure 204 may be an annular groove structure disposed on the upper groove wall 211. Through the above structural design, the present disclosure can further optimize the positioning effect of the sealing ring 300, and be beneficial to reduce the processing difficulty.

Different from the design in which the first positioning structure 204 of an annular structure is adopted in the embodiment shown in FIG. 16, in an embodiment not shown in the present disclosure, the first positioning structure 204 may include a plurality of positioning portions, and the plurality of positioning portions belonging to one first positioning structure 204 are spaced apart along a circular path. Through the above structural design, since the first positioning structure 204 is not a closed annular structure, the present disclosure can further realize the circumferential positioning of the sealing ring 300 and, for example, can avoid the relative rotation of the sealing ring 300 and the sealing groove 210, thereby further ensuring the sealing performance of the valve structure.

Based on the structural design in which the first positioning structure 204 includes the plurality of positioning portions, in an embodiment not shown in the present disclosure, the positioning portions may be arc-shaped or dot-shaped.

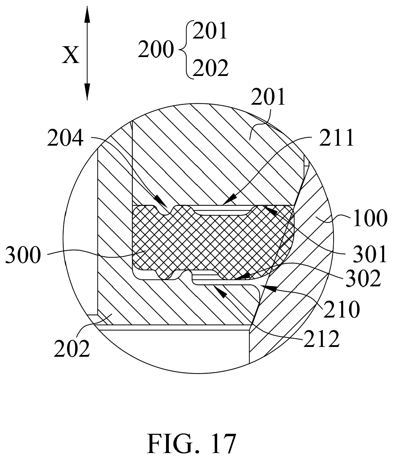

Referring to FIG. 17, FIG. 17 representatively shows a partial sectional view of the valve structure capable of embodying the principles of the present disclosure in another exemplary embodiment.

Different from the structural design in which the first positioning structure 204 includes the groove in the embodiment shown in FIG. 14, as shown in FIG. 17, in an embodiment of the present disclosure, taking the first positioning structure 204 provided on the upper groove wall 211 as an example, the first positioning structure 204 may include a protrusion.

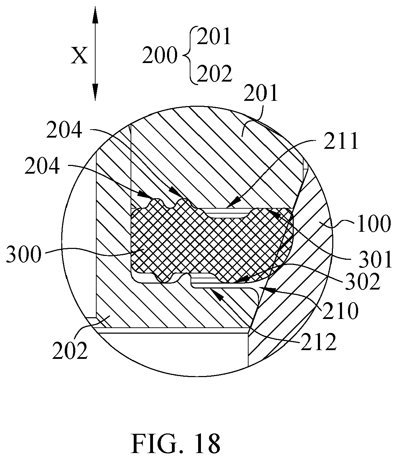

Referring to FIG. 18, FIG. 18 representatively shows a partial sectional view of the valve structure capable of embodying the principles of the present disclosure in another exemplary embodiment.

Different from the structural design in which the upper groove wall 211 is provided with one first positioning structure 204 in the embodiment shown in FIG. 14, as shown in FIG. 18, in an embodiment of the present disclosure, taking the upper groove wall 211 provided with the first positioning structure 204 as an example, the upper groove wall 211 may be further provided with at least two first positioning structures 204 (for example but not limited to two first positioning structures shown in the drawings), and the at least two first positioning structures 204 are spaced apart in the radial direction on the upper groove wall 211. Through the above structural design, the present disclosure can further optimize the positioning effect of the sealing ring 300.

Similarly, in an embodiment not shown in the present disclosure, when the lower groove wall 212 is provided with the first positioning structure 204, the lower groove wall 212 may be further provided with at least two first positioning structures 204, and the at least two first positioning structures 204 are spaced apart in the radial direction on the lower groove wall 212. Through the above structural design, the present disclosure can further optimize the positioning effect of the sealing ring 300.

As shown in FIGS. 14 to 16, in an embodiment of the present disclosure, the valve core 200 may include a piston 201 and a pressing sleeve 202, the piston 201 has a through hole penetrating the piston in the axial direction X, and the pressing sleeve 202 is sleeved in the through hole and located at an end of the piston 201 in the axial direction X. Accordingly, the piston 201 and the pressing sleeve 202 together form the sealing groove 210 of the valve core 200. Through the above structural design, the present disclosure can facilitate squeezing the sealing ring 300 by the pressing sleeve 202 and the piston 201 during the assembly process, so that the sealing ring 300 can more fully generate the deformation matched with the first positioning structure 204, thereby further optimizing the positioning effect of the sealing ring 300 and improving the sealing effect. In some embodiments, the valve core 200 may also be of an integral structure, and in this case, the sealing ring 300 may also be mounted into the sealing groove 210 in other ways, for example but not limited to an interference fit (that is, a sectional diameter of the sealing ring 300 is greater than a sectional width of the sealing groove 210). Certainly, even if the valve core 200 adopts a structure in which a plurality of components are assembled and combined, the sealing groove 210 may also be disposed on only one of the components, that is, only one of the components is formed, which is not limited to this embodiment.

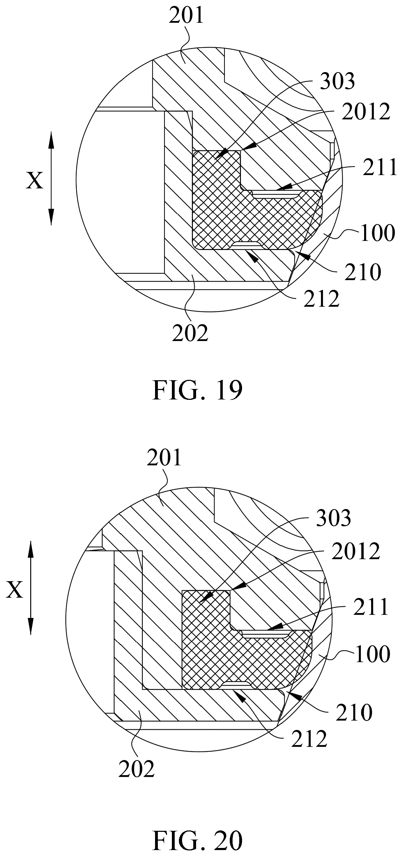

Referring to FIG. 19, FIG. 19 representatively shows a partial sectional view of the valve structure capable of embodying the principles of the present disclosure in another exemplary embodiment.

As shown in FIG. 19, based on the structural design in which the piston 201 and the pressing sleeve 202 of the valve core 200 together form the sealing groove 210, in an embodiment of the present disclosure, the piston 201 may form the upper groove wall 211, and the pressing sleeve 202 may form the lower groove wall 212 and a groove bottom of the sealing groove 210. On this basis, an inner circumference of the piston 201 is provided with a step structure 2012 at an end facing the pressing sleeve 202, the step structure 2012 and the pressing sleeve 202 together form a groove, and the groove is the above first positioning structure 204.

Referring to FIG. 20, FIG. 20 representatively shows a partial sectional view of the valve structure capable of embodying the principles of the present disclosure in another exemplary embodiment.

As shown in FIG. 20, based on the structural design in which the piston 201 and the pressing sleeve 202 of the valve core 200 together form the sealing groove 210, in an embodiment of the present disclosure, the piston 201 may form the upper groove wall 211 and the groove bottom of the sealing groove 210, and the pressing sleeve 202 may form the lower groove wall 212. On this basis, the piston 201 may be provided with a groove at a position where the upper groove wall 211 abuts the groove bottom, and the groove is the first positioning structure 204 described above.

As shown in FIG. 19 or FIG. 20, in some embodiments of the present disclosure, the sealing ring 300 has a first surface 301 abutting against the upper groove wall 211 and a second surface 302 abutting against the lower groove wall 212; at least one of the first surface 301 or the second surface 302 may be provided with a second positioning structure 303; the second positioning structure 303 is at least one of a groove and a protrusion, and the second positioning structure 303 and the first positioning structure 204 are arranged correspondingly in position and are in limiting fit. For example, taking the embodiment shown in FIG. 19 or FIG. 20 as an example, when the upper groove wall 211 is provided with the first positioning structure 204 and the first positioning structure 204 is a groove, the first surface 301 of the sealing ring 300 may be provided with a protrusion at a position corresponding to the groove, and the protrusion of the sealing ring 300 is accommodated in the groove of the upper groove wall 211. Accordingly, a cross-section of the sealing ring 300 is substantially L-shaped. Through the above structural design, the present disclosure can further optimize the positioning effect on the sealing ring 300, and can further extend an infiltration path of an external medium in case of leakage, thereby further improving the sealing effect.

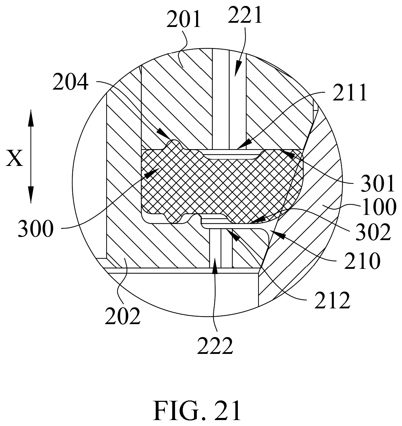

Referring to FIG. 21, FIG. 21 representatively shows a partial sectional view of the valve structure capable of embodying principles of the present disclosure in another exemplary embodiment.

As shown in FIG. 21, in an embodiment of the present disclosure, the valve body 100 has a valve chamber, the valve chamber has a valve port 101, and the valve core 200 cooperates with the valve port 101 to realize flow regulation and sealing functions. For example, taking the structures shown in FIGS. 1 and 2 as an example, when the valve port 101 is located at the lower end of the valve structure, the valve port 101 may be understood as a lower port of the valve chamber, that is, that is, the entire space above the valve port 101 is the valve chamber. The upper groove wall 211 may be provided with a first balance channel 221, and the first balance channel 221 is in communication with the sealing groove 210 and an area of the valve chamber located above the sealing ring 300, that is, one end of the first balance channel 221 is opened on the upper groove wall 211, and the other end of the first balance channel 221 is opened on an area of a surface of the valve core 200 located above the sealing groove 210 and is in communication with a space outside the valve core 200 and in the valve body 100 (for example, an area of the valve chamber located above the valve core 200). When the upper groove wall 211 is provided with the first positioning structure 204, the opening position of the first balance channel 221 on the upper groove wall 211 and the first positioning structure 204 are spaced apart in the radial direction. The lower groove wall 212 is provided with a second balance channel 222, and the second balance channel 222 is in communication with the sealing groove 210 and an area of the valve chamber located below the sealing ring 300, that is, one end of the second balance channel 222 is opened on the lower groove wall 212, and the other end is opened on an area of the surface of the piston 201 located below the sealing groove 210 and is in communication with a space outside the valve core 200 and in the valve body 100 (for example, an area of the valve chamber located below the valve core 200, such as the valve port 101). When the lower groove wall 212 is provided with the first positioning structure 204, an opening position of the second balance channel 222 on the lower groove wall 212 and the first positioning structure 204 are spaced apart in the radial direction. Through the above structural design, the present disclosure can use the balance channels on the upper and lower sides of the sealing groove 210 to divert the medium in the valve chamber to the upper part and the lower part of the seal, respectively, such that the sealing ring 300 is subjected to diversion pressure and hence is squeezed towards two sides in the circumferential direction in the area of the sealing ring close to the valve port 101. Consequently, the outer area of the sealing ring 300 resists the squeezing arising from the pressure difference, and forces on the sealing ring 300 tend to be balanced, which is conducive to reducing or avoiding the deformation of the sealing ring 300 and improving the sealing performance of the valve structure.

It should be noted that the embodiment shown in FIG. 21 is illustrated by using an example in which the upper groove wall 211 and the lower groove wall 212 are respectively provided with balance channels. In some embodiments of the present disclosure, the valve core 200 may also be provided with a balance channel only on one of the upper groove wall 211 and the lower groove wall 212, which is not limited to this embodiment.

As shown in FIG. 21, based on a structural design in which the upper groove wall 211 is provided with the first balance channel 221, in an embodiment of the present disclosure, when the upper groove wall 211 is provided with the first positioning structure 204, the first positioning structure 204 may be located at radially opposite inner sides of the first balance channel 221.

Similarly, based on a structural design in which the lower groove wall 212 is provided with the second balance channel 222, in an embodiment not shown in the present disclosure, when the lower groove wall 212 is provided with the first positioning structure 204, the first positioning structure 204 may be located at radially opposite inner sides of the second balance channel 222.

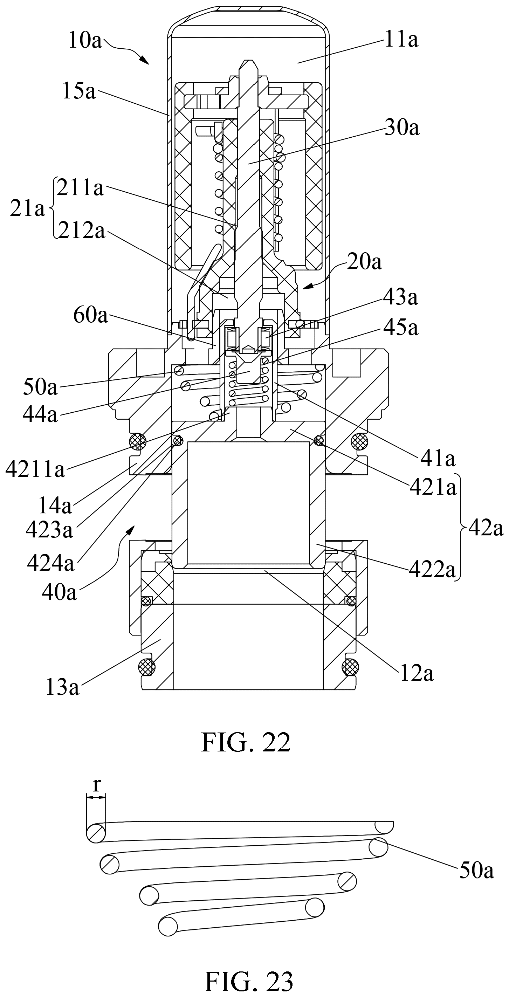

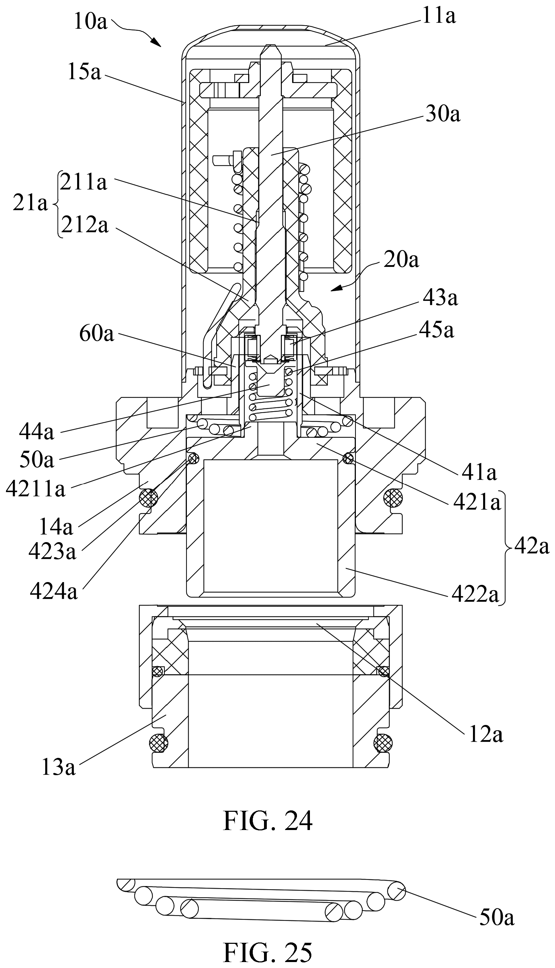

As shown in FIGS. 22 and 24, an embodiment of the present disclosure further provides a valve structure. The valve structure includes a valve housing 10a, a nut sleeve 20a, a screw 30a, a valve core 40a, and a valve needle spring 50a. The valve housing 10a has an accommodating chamber 11a and a valve port 12a, the valve port 12a is in communication with the accommodating chamber 11a, the nut sleeve 20a is disposed in the accommodating chamber 1la, and the nut sleeve 20a is fixedly connected to the valve housing 10a. The screw 30a passes through the nut sleeve 20a and is in threaded connection with the nut sleeve 20a. The valve core 40a is connected to the screw 30a and disposed corresponding to the valve port 12a, and the screw 30a drives the valve core 40a to block or open the valve port 12a. The valve needle spring 50a is disposed between the valve core 40a and the nut sleeve 20a. The valve needle spring 50a is of a tower-shaped structure.

Since the valve needle spring 50a is of the tower-shaped structure, compared with an equal-diameter spring with the same number of turns, the tower-shaped spring with the same number of turns has a lower total height when being compressed to a limit state, a space available for the valve core 40a to move is relatively large, and even if the valve core 40a rises to a maximum height (at this time, a conventional equal-diameter spring is in a bottoming-out state), the tower-shaped spring can still be in a non-fully compressed state, thereby avoiding self-locking of threads of the screw 30a.

When the valve core 40a moves away from the nut sleeve 20a, the compressed valve needle spring 50a is reset under its own restoring force, such that the valve structure can continue to work again after being opened.

For a cylindrical spring, diameters of two ends of the cylindrical spring in the axial direction are identical, and when the cylindrical spring is compressed, the two ends of the cylindrical spring in the axial direction are close to each other and face each other, so that the cylindrical spring occupies a relatively large space in the axial direction even if the cylindrical spring is compressed to an extreme position. To this end, the valve needle spring 50a includes a plurality of coils connected to each other and coaxially arranged, and wire diameters of the plurality of coils are identical. If the diameter of the second end of the valve needle spring 50a is greater than the diameter of the first end, the second end of the valve needle spring 50a may be referred to as a large opening end, and the first end of the valve needle spring 50a may be referred to as a small opening end. When the valve needle spring 50a is in the compressed state, the large opening end can cover the small opening end, the edges of the large opening end and the small opening end offset relative to each other, so that the height of the valve needle spring 50a when compressed to its limit is equal to the wire diameter of one of the wires.

When the cylindrical spring is compared with the valve needle spring 50a, a total height of the valve needle spring 50a after bottoming out is lower, and the space available for the valve core 40a to move freely is larger. Correspondingly, when the valve core 40a rises sufficiently to bottom out the cylindrical spring, if the cylindrical spring is replaced with the valve needle spring 50a, the valve needle spring 50a will not be fully compressed, and therefore, the valve needle spring 50a, when in the non-fully compressed state, will not cause self-locking of threads of the screw, thereby ensuring the normal operation of the valve structure.

In an embodiment, the second end of the valve needle spring 50a is disposed towards the nut sleeve 20a.

It can be understood that a part of an outer wall of the nut sleeve 20a with a relatively large diameter corresponds to the valve core 40a, and the large opening end of the valve needle spring 50a is disposed towards the nut sleeve 20a. That is, the valve needle spring 50a is specifically a structure with a large upper end and a small lower end at this time.

It can be understood that, in some other embodiments, the first end of the valve needle spring 50a may also be disposed towards the nut sleeve 20a. That is, the valve needle spring 50a is specifically a structure with a small upper end and a large lower end.

In an embodiment, as shown in FIGS. 22-23, the valve needle spring 50a includes a plurality of coils connected to each other and disposed coaxially. The plurality of coils have different diameters, such that a coil with a larger diameter can provide a space for accommodating and compressing a coil with a smaller diameter adjacent to the coil with a larger diameter, thereby reducing a total height after compression.

In an embodiment, the diameters of the plurality of coils gradually increase or gradually decrease in an axial direction of the valve core 40a.

In other words, the diameters of the plurality of coils increase or decrease from top to bottom, sequentially, and the diameters of the coils gradually change, playing a role of slow transition. If the diameters of the plurality of coils decrease from top to bottom, sequentially, when the valve needle spring 50a is gradually compressed, a coil of a lower layer may be accommodated in a coil of an upper layer adjacent to the coil of the lower layer, and thus the plurality of coils can be accommodated sequentially from bottom to top, and the coils of the two adjacent layers are not in direct contact with each other. When the valve needle spring 50a is compressed to its limit position, the plurality of coils may form a concentric ring structure that is approximately coplanar, thereby reducing the total length of the coils after compression.

In an embodiment, as shown in FIGS. 24-25, the wire diameters of the plurality of coils are identical, and the height of the valve needle spring 50a when compressed to its limit is equal to the wire diameter of one coil.

It may be understood that the plurality of coils includes a first coil, a second coil, a third coil, a fourth coil, and a fifth coil from in sequence top to bottom, and diameters of the five coils are sequentially reduced. When the valve needle spring 50a is gradually compressed, the fifth coil may be accommodated in the fourth coil due to a diameter of the fifth coil slightly smaller than that of the fourth coil, and the fourth coil may be accommodated in the third coil due to the diameter of the fourth coil slightly smaller than that of the third coil, until the second coil is accommodated in the first coil. In this case, the second coil, the third coil, the fourth coil and the fifth coil are all accommodated in the first coil, and then a minimum height of the entire valve needle spring 50a in the axial direction of the valve core 40a in the extreme compression state is a height of the first coil, and the diameters of the plurality of coils are all r. Thus, the height of the valve needle spring 50a in the axial direction of the valve core 40a in the final compression state is the diameter r of the first coil, which effectively reduces a space occupied by the valve needle spring 50a in the compression state.

In an embodiment, the valve housing 10a includes a valve seat 13a, and a valve body 14a and a valve cover 15a connected to each other. The valve port 12a is disposed on the valve seat 13a, at least a part of the valve body 14a is located in the valve cover 15a, the nut sleeve 20a is connected to the valve body 14a, the nut sleeve 20a is located in the valve cover 15a, and the valve needle spring 50a is located in the valve body 14a.

The valve core 40a includes a body 42a, and a first end of the valve needle spring 50a abuts against the body 42a. A guiding ring 60a is disposed at a top of the valve body 14a, and at least a part of the guiding ring 60a is located in the nut sleeve 20a. The guiding ring 60a has a radial segment, which is located between the nut sleeve 20a and the valve core 40a. The second end of the valve needle spring 50a abuts against the radial segment, and the radial segment of the guiding ring 60a provides a limiting position for the valve needle spring 50a.

The axial segment is provided with a first sub-through hole, the first sub-through hole is in communication with an inner chamber of the valve housing 10a with the inner chamber of the valve body 14a, and the first sub-through hole plays a role of intermediate communication.

The valve core 40a passes through the guiding ring 60a, and the guiding ring 60a can guide the valve core 40a, thereby improving coaxiality between the valve core 40a and the valve port 12a.

As shown in FIGS. 22 and 24, the body 42a includes a connecting end 421a and a blocking end 422a that are disposed opposite to each other, the connecting end 421a is connected to the spring sleeve 41a, the body 42a is disposed close to the valve port 12a, the spring sleeve 41a is in guiding fit with the guiding ring 60a, the valve needle spring 50a is sleeved outside the spring sleeve 41a, an end of the valve needle spring 50a abuts against the connecting end 421a, the connecting end 421a is fixedly connected to the spring sleeve 41a, and the blocking end 422a is disposed corresponding to the valve port 12a. Specifically, the connecting end 421a is provided with a connecting protrusion 4211a, and the first end of the valve needle spring 50a is sleeved outside the connecting protrusion 4211a and abuts against the body 42a. The connecting protrusion 421la provides a positioning position for the valve needle spring 50a, and the body 42a provides an abutting position for the valve needle spring 50a. Specifically, the guiding ring 60a further includes an axial segment, the spring sleeve 41a is in guiding fit with the axial segment of the guiding ring 60a, and the valve needle spring 50a is sleeved outside the spring sleeve 41a. The axial segment of the guiding ring 60a guides the spring sleeve 41a, such that the screw 30a drives the spring sleeve 41a and the body 42a to move in the axial direction.

The connecting protrusion 4211a passes through the spring sleeve 41a and is fixedly connected to an inner wall of the spring sleeve 41a, so that the body 42a is stably connected in the spring sleeve 41a, thereby improving the structural stability between the body 42a and the spring sleeve 41a. The connecting protrusion 4211a may be connected to the spring sleeve 41a by welding.

Due to a smaller size of the connecting protrusion 4211a, the first end of the valve needle spring 50a with a smaller diameter can be sleeved outside the connecting protrusion 4211a.

In this embodiment, the guiding ring 60a and the valve body 14a are integrally formed, the guiding ring 60a is provided with a communication hole, and areas above and below the guiding ring 60a in the accommodating chamber 11a are in communication through the communication hole.

In order to reduce the driving force of opening valve, an outer wall of the body 42a is provided with an annular recess 423a, an annular sealing ring 424a is provided in the annular recess 423a, the body 42a is in sealing and movable fit with the valve body 14a through the annular sealing ring 424a, and the body 42a has a channel in communication with the valve port 12a, and in communication with the inner chamber of the valve body 14a where the valve needle spring 50a is located.

In order to communicate the channel of the body 42a with the inner chamber of the valve body 14a where the valve needle spring 50a is located, the spring sleeve 41a is provided with a second sub-through hole.

In an embodiment, the nut sleeve 20a is provided with a first through hole 21a along an axial direction of the nut sleeve. The first through hole 21a includes a threaded segment 211a and a guiding segment 212a, the threaded segment 211a is disposed away from the valve port 12a, and the threaded segment 211a is in threaded connection with the screw 30a.

In an embodiment, the valve core 40a further includes a bearing 43a, the bearing 43a is disposed in the spring sleeve 41a, an inner ring of the bearing 43a is sleeved over and fixedly connected to the screw 30a. An inner wall of the spring sleeve 41a is in clearance fit with an outer ring of the bearing 43a, and an inner wall of the spring sleeve 41a is configured to guide the outer ring of the bearing 43a. By providing the bearing 43a in the spring sleeve 41a, while the inner ring of the bearing 43a rotates with the screw 30a, the outer ring of the bearing 43a, the spring sleeve 41a and the body 42a do not rotate with the screw 30a, thereby reducing the friction between the outer ring of the bearing 43a, the spring sleeve 41a and the body 42a with other components, and prolonging the overall service life of the device. The inner wall of the spring sleeve 41a is configured to guide the outer ring of the bearing 43a, such that the bearing 43a and the screw 30a are not skewed when the bearing 43a moves with the screw 30a in the axial direction, thereby improving the coaxiality between the screw 30a and the valve port 12a, and further improving the coaxiality between the valve core 40a and the valve port 12a.

In an embodiment, the valve core 40a further includes a connecting member 44a and a buffer spring 45a that are sequentially disposed in the axial direction. The buffer spring 45a is disposed close to the valve port 12a. Both of the connecting member 44a and the buffer spring 45a are located in the spring sleeve 41a. The connecting member 44a includes a first segment and a second segment. The second segment of the connecting member 44a is disposed close to the valve port 12a. A diameter of the first segment of the connecting member 44a is greater than a diameter of the second segment of the connecting member 44a. The first segment of the connecting member 44a abuts against an outer ring of the bearing 43a. One end of the buffer spring 45a is sleeved outside the second segment of the connecting member 44a and abuts against an end surface of the first segment of the connecting member 44a, and the other end of the buffer spring 45a abuts against the body 42a.

With the above structural arrangement, the structural stability between the connecting member 44a, the buffer spring 45a and the outer ring of the bearing 43a can be better, so that the overall structural stability of the valve core 40a can be better. The connecting member 44a is configured to connect the buffer spring 45a and the outer ring of the bearing 43a. Optionally, a through hole is disposed in the connecting member 44a, and the through hole is configured to avoid the inner ring of the bearing 43a and the screw 30a.

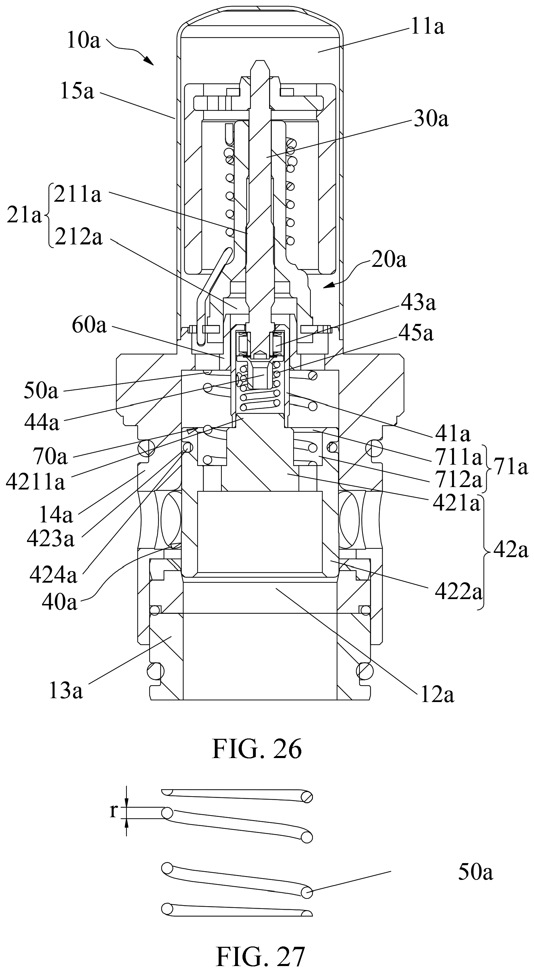

As shown in FIGS. 26-29, an embodiment of the present disclosure provides a valve structure, which includes a valve housing 10a, a nut sleeve 20a, a screw 30a, a valve core 40a, and a valve needle spring 50a. The valve housing 10a is provided with an accommodating chamber 11a and a valve port 12a. The valve port 12a is in communication with the accommodating chamber 11a. The nut sleeve 20a is disposed in the accommodating chamber 11a, and the nut sleeve 20a is fixedly connected to the valve housing 10a. The screw 30a passes through the nut sleeve 20a and is in threaded connection with the nut sleeve 20a. The valve core 40a is connected to the screw 30a and disposed corresponding to the valve port 12a. The screw 30a drives the valve core 40a to block or open the valve port 12a. The valve needle spring 50a is disposed between the valve core 40a and the nut sleeve 20a.

Specifically, the valve housing 10a has an accommodating chamber 11a and a valve port 12a, the nut sleeve 20a is disposed in the accommodating chamber 11a, and the screw 30a is in threaded connection with the nut sleeve 20a. The screw 30a is connected with the valve core 40a and drives the valve core 40a to block or open the valve port 12a. The valve needle spring 50a is disposed between the valve core 40a and the nut sleeve 20a. With the above structure, the valve needle spring 50a enables upper side surfaces or lower side surfaces of threads of the screw 30a and the nut sleeve 20a to keep abutting against each other at the threaded connection of the screw and the nut sleeve, such that, during the upward and downward movement of the screw 30a relative to the nut sleeve 20a, a position of the screw 30a relative to the nut sleeve 20a is not affected by a thread clearance, and a degree of opening the valve port 12a by the valve core 40a is not affected by the thread clearance. Thus, the degree of opening the valve port 12a by the valve core 40a is prevented from being different when the screw 30a moves to a same position during the upward and downward movement of the screw 30a, to improve the flow control accuracy of the valve structure.

However, if the valve core rises to a maximum limit height, the valve core will compress the valve needle spring to the limit state, and the valve needle spring in the limit state applies a great force to the valve core, so that the thread of the screw subjected to the spring force is self-locked and cannot rotate, and the valve structure cannot work normally.

As shown in FIGS. 26 to 29, to resolve this problem, the valve structure according to this embodiment further includes an accommodating structure 70a, the accommodating structure 70a is disposed on a side of the valve core 40a close to the nut sleeve 20a, and the valve needle spring 50a is at least partially accommodated in the accommodating structure 70a.

For the valve structure according to the present embodiment, the accommodating structure 70a is disposed on the side of the valve core 40a close to the nut sleeve 20a, the accommodating structure 70a corresponds to the valve needle spring 50a located between the valve core 40a and the nut sleeve 20a, the accommodating structure 70a can accommodate at least a part of the valve needle spring 50a, and the accommodating structure 70a reserves a mounting space required for the valve needle spring 50a. On the premise of realizing the original function of the valve core 40a, the total length of the valve needle spring 50a after compression can be increased to a maximum extent, which effectively avoids a phenomenon of bottoming out of the valve needle spring 50a, so that the energized coil may still drive the valve core 40a to continue working through the screw 30a after the valve structure is opened.

It should be particularly noted that the valve needle spring 50a may be specifically a cylindrical spring or a tower-shaped spring, and the specific structure of the valve needle spring 50a is not limited in this embodiment, and may be adjusted according to actual production conditions.

In an embodiment, as shown in FIG. 27, when the valve needle spring 50a is in a natural state, the valve needle spring 50a includes a plurality of coils with the same wire diameter; a height of the valve needle spring 50a in the axial direction of the valve core 40a is greater than a sum of the wire diameters of the plurality of coils. The wire diameter of each coil is specifically r.

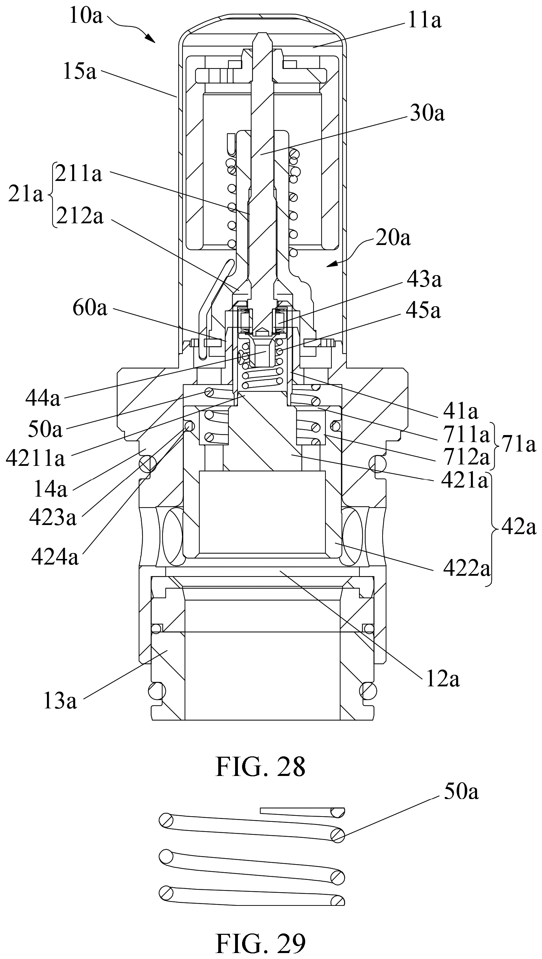

In an embodiment, as shown in FIG. 29, when the valve needle spring 50a is in the compressed state, the height of the valve needle spring 50a is still greater than the sum of the wire diameters of the plurality of coils, and the self-locking of threads of the screw 30a caused by the bottoming out phenomenon of the spring will not occur.

In an embodiment, the accommodating structure 70a is configured as a first accommodating groove 71a disposed at an end of the valve core 40a facing the nut sleeve 20a.

Specifically, the first accommodating groove 71a is opened at an upper end of the valve core 40a and corresponds to a position of the valve needle spring 50a, and the first accommodating groove 71a is configured to accommodate at least a part of the valve needle spring 50a. The lower end part of the valve needle spring 50a is accommodated in the first accommodating groove 71a, i.e., the lower end part of the valve needle spring 50a is trapped in the first accommodating groove 71a. The first accommodating groove 71a plays a role in increasing the total length of the valve needle spring 50a after compression, so as to prevent the valve needle spring 50a from bottoming out.

In addition, the first accommodating groove 71a also plays a role in limiting the valve needle spring 50a to avoid the position deviation of the valve needle spring 50a during the compression, so as to ensure the position accuracy of the valve needle spring 50a. At the same time, a bottom of the valve needle spring 50a abuts against a groove bottom of the first accommodating groove 71a, the groove bottom of the first accommodating groove 71a provides a better supporting force for the valve needle spring 50a, and the groove wall of the first accommodating groove 71a provides a good guiding effect for the valve needle spring 50a during compression or extension.

In an embodiment, the first accommodating groove 71a is an annular structure.

Since the valve needle spring 50a may be a cylindrical spring or a tower-shaped spring, a projection of the valve needle spring 50a relative to the reference plane is an annular structure, with the reference plane being a plane perpendicular to the axial direction of the valve core 40a. The first accommodating groove 71a is configured as an annular structure, such that a contour of the first accommodating groove 71a matches with a contour of the valve needle spring 50a to ensure the first accommodating groove 71a effectively accommodates the valve needle spring 50a.

In an embodiment, the first accommodating groove 71a includes a guiding portion 711a and an accommodating portion 712a, the guiding portion 71la is a trumpet-shaped structure, with a large opening end of the guiding portion 711a disposed towards the nut sleeve 20a and a small opening end of the guiding portion 711a in communication with the accommodating portion 712a.

Specifically, the large opening end of the guiding portion 711a is disposed towards the nut sleeve 20a and the small opening end of the guiding portion 71la is in communication with the accommodating portion 712a, such that the guiding portion 711a and the accommodating portion 712a are in communication with each other. The large opening end with a larger diameter plays a role of capacity expansion, which facilitates the valve needle spring 50a to enter the accommodating portion 712a through the large opening end of the guiding portion 711a, and achieves a good guiding effect on the valve needle spring 50a. The small opening end with a smaller diameter is connected to the accommodating portion 712a, and the valve needle spring 50a may be guided into the accommodating portion 712a by using the guiding portion 711a with a tapered structure, thereby improving the accuracy of the mounting position of the valve needle spring 50a.

In an embodiment, an end of the valve core 40a facing the nut sleeve 20a is provided with a positioning column, the first accommodating groove 71a is disposed around the positioning column, and the positioning column passes through the valve needle spring 50a.

Since the end of the valve core 40a facing the nut sleeve 20a is provided with the first accommodating groove 71a, the part of the end of the valve core 40a facing the nut sleeve 20a that is not provided with the first accommodating groove 71a has two portions, one portion of which is located in the valve needle spring 50a to form the positioning portion, and the other portion of which is located outside the valve needle spring 50a. An outer wall of the positioning column serves as a groove wall of the first accommodating groove 71a, and during initial installation, the positioning column passes through the valve needle spring 50a to play a role in initially positioning the valve needle spring 50a and ensure installation accuracy of the valve needle spring 50a. During the compression or extension of the valve needle spring 50a, the valve needle spring 50a is slidable relative to the positioning column, and the positioning column has a guiding effect to avoid the position deviation of the valve needle spring 50a.

In an embodiment, a first through hole 21a along the axial direction of the nut sleeve 20a is provided in the nut sleeve 20a, the first through hole 21a includes a threaded segment 211a and a guiding segment 212a, the threaded segment 211a is disposed away from the valve port 12a, and the threaded segment 211a is in threaded connection with the screw 30a. The valve housing 10a includes a valve cover 15a and a valve body 14a that are connected to each other. The nut sleeve 20a located in the valve cover 15a is connected to the valve body 14a. A guiding ring 60a is provided at a top of the valve body 14a. The guiding ring 60a includes a radial segment and an axial segment, at least a part of the axial segment is located in the nut sleeve 20a, and two ends of the valve needle spring 50a abut against the radial segment of the guiding ring 60a and the valve core 40a, respectively.

The valve core 40a passes through the guiding ring 60a, and the guiding ring 60a can guide the valve core 40a, thereby improving coaxiality between the valve core 40a and the valve port 12a. In addition, the guiding ring 60a is disposed at the top of the valve body 14a, two ends of the valve needle spring 50a are respectively abutted against the radial segment of the guiding ring 60a and the valve core 40a, the guiding ring 60a and the valve core 40a play a role in limiting the valve needle spring 50a, and the valve needle spring 50a plays a role in buffering and resetting.

In other embodiments, an end of the valve needle spring 50a away from the valve core 40a abuts against the nut sleeve 20a, and the nut sleeve 20a limits the valve needle spring 50a.

In an embodiment, as shown in FIGS. 26 and 28, the valve core 40a includes a body 42a and a spring sleeve 41a, and the body 42a includes a connecting end 421a and a blocking end 422a that are disposed opposite to each other. The accommodating structure 70a is disposed at the connecting end 421a, and the blocking end 422a blocks the valve port 12a. The connecting end 421a is provided with the positioning column, the positioning column is connected to the spring sleeve 41a, the valve needle spring 50a is sleeved outside the spring sleeve 41a and the positioning column. The spring sleeve 41a is in guiding fit with the axial segment of the guiding ring 60a.

That is, the valve needle spring 50a is disposed between the connecting end 421a of the body 42a and the guiding ring 60a. The guiding ring 60a guides the spring sleeve 41a, so that the screw 30a drives the spring sleeve 41a and the body 42a to move in the axial direction.

In an embodiment, the valve core 40a further includes a bearing 43a, the bearing 43a is disposed in the spring sleeve 41a, and an inner ring of the bearing 43a is sleeved over and fixedly connected to the screw 30a. An inner wall of the spring sleeve 41a is in clearance fit with an outer ring of the bearing 43a, and an inner wall of the spring sleeve 41a is configured to guide the outer ring of the bearing 43a. By providing the bearing 43a in the spring sleeve 41a, while the inner ring of the bearing 43a rotates with the screw 30a, the outer ring of the bearing 43a, the spring sleeve 41a, and the body 42a do not rotate with the screw 30a, thereby reducing the friction of the outer ring of the bearing 43a, the spring sleeve 41a, and the body 42a with other components, and prolonging the service life of the entire device. The inner wall of the spring sleeve 41a is configured to guide the outer ring of the bearing 43a, such that the bearing 43a and the screw 30a are not skewed when the bearing 43a moves axially with the screw 30a, thereby improving the coaxiality between the screw 30a and the valve port 12a, and further improving the coaxiality between the valve core 40a and the valve port 12a.

In an embodiment, the valve core 40a further includes a connecting member 44a and a buffer spring 45a that are sequentially disposed in an axial direction. The buffer spring 45a is disposed close to the valve port 12a. Both of the connecting member 44a and the buffer spring 45a are located in the spring sleeve 41a. The connecting member 44a includes a first segment and a second segment. The second segment of the connecting member 44a is disposed close to the valve port 12a. A diameter of the first segment of the connecting member 44a is greater than a diameter of the second segment of the connecting member 44a. The first segment of the connecting member 44a abuts against an outer ring of the bearing 43a. One end of the buffer spring 45a is sleeved outside the second segment of the connecting member 44a and abuts against an end surface of the first segment of the connecting member 44a, and the other end of the buffer spring 45a abuts against the body 42a.

With the above structural arrangement, the structural stability between the connecting member 44a, the buffer spring 45a, and the outer ring of the bearing 43a can be better, so that the overall structural stability of the valve core 40a can be better. The connecting member 44a is configured to connect the buffer spring 45a and the outer ring of the bearing 43a. Optionally, a through hole is provided in the connecting member 44a, and the through hole is configured to avoid the inner ring of the bearing 43a and the screw 30a. The buffer spring 45a is configured to buffer a thrust force between the screw 30a and the body 42a, to prevent the screw 30a from continuing to move downward and excessively squeezing the body 42a after the body 42a blocks the valve port 12a.

Specifically, an end surface of the connecting end 421a is provided with a connecting protrusion 4211a, the connecting protrusion 4211a passes through the spring sleeve 41a, and the connecting protrusion 4211a is fixedly connected to an inner wall of the spring sleeve 41a. The connecting protrusion 4211a passes through the spring sleeve 41a and is fixedly connected to the inner wall of the spring sleeve 41a, so that the body 42a is stably connected in the spring sleeve 41a, thereby improving the structural stability between the body 42a and the spring sleeve 41a. The connecting protrusion 4211a and the spring sleeve 41a may be connected to each other by welding.

Specifically, the valve housing 10a further includes a valve seat 13a, and the valve port 12a is disposed on the valve seat 13a. The valve body 14a has a second through hole. The valve body 14a has a first end and a second end opposite to each other, and the second end of the valve body 14a is fixedly connected to the valve seat 13a. The second through hole is in communication with the valve port 12a, the body 42a is disposed in the second through hole, and an outer wall of the body 42a is in guiding fit with an inner wall of the second through hole. An accommodating space is provided in the valve cover 15a, the valve cover 15a has a first end and a second end opposite to each other, the second end of the valve cover 15a is fixedly connected to the first end of the valve body 14a, and the accommodating space is in communication with the second through hole and forms an accommodating chamber 11a.

The above structure facilitates to the installation of internal components of the valve structure. The nut sleeve 20a may be fixedly connected to an end surface of the first end of the valve body 14a, which facilitates the installation of the nut sleeve 20a. The outer wall of the body 42a is in guiding fit with the inner wall of the second through hole, so that the second through hole can guide the body 42a, and the coaxiality between the body 42a and the valve port 12a is further improved. The first end of the valve cover 15a is in a blocked state, that is, the top of the accommodating portion 712a is in a blocked state.

In this embodiment, the guiding ring 60a and the valve body 14a are integrally formed, the guiding ring 60a is provided with a communication hole, and areas above and below the guiding ring 60a in the accommodating chamber 11a are in communication through the communication hole. Specifically, the outer wall of the body 42a is provided with an annular recess 423a, an annular sealing ring 424a is disposed in the annular recess 423a, and the annular sealing ring 424a is configured to seal the inner wall of the second through hole and the outer wall of the body 42a. The annular sealing ring 424a is disposed in the annular recess 423a, which can prevent the annular sealing ring 424a from being separated from the body 42a.

In this embodiment, the body 42a of the valve core 40a is further provided with a limiting protrusion, and a gap between the limiting protrusion and the positioning column forms the first accommodating groove 71a.

The valve needle spring 50a is located in the limiting protrusion. By providing the limiting protrusion, the valve needle spring 50a is located in the gap between the limiting protrusion and the positioning column, which can guide the valve needle spring 50a, thereby preventing the valve needle spring 50a from being twisted and deformed.

It should be noted herein that the valve structures shown in the drawings and described in this specification are just a few examples of the many types of valve structures that can employ the principles of the present disclosure. It should be clearly understood that the principles of the present disclosure are not limited to any details or any components of the valve structure shown in the drawings or described in this specification.

In conclusion, the valve structure according to the present disclosure includes the valve body 100, the valve core 200 and the sealing ring 300; the valve core 200 is provided with the sealing groove 210 in the circumferential direction; the sealing ring 300 is at least partially disposed in the sealing groove 210; the cavity is formed between the sealing groove 210 and the sealing ring 300; the valve core 200 is provided with the balance channel; one end of the balance channel is in communication with the cavity, and the other end is in communication with the valve chamber 110. Through the above design, the present disclosure can utilize the balance channel to divert the fluid in the valve chamber 110 to the upper part and/or the lower part of the sealing ring 300, such that the sealing ring 300 is subjected to diversion pressure and hence is squeezed towards two sides in the circumferential direction in the area of the sealing ring 300 close to the valve port. Consequently, the outer area of the sealing ring 300 resists the squeezing arising from the pressure difference, and forces on the sealing ring 300 tend to be balanced, which is conducive to reducing or avoiding deformation of the sealing ring 300 and improving sealing performance of the valve structure.

Although the present disclosure has been described with reference to several typical embodiments, it should be understood that the terms used are illustrative and exemplary rather than restrictive. Since the present disclosure may be embodied in various forms without departing from the spirit or essence of the present disclosure, it should be understood that the above embodiments are not limited to any of the foregoing details, but should be interpreted broadly within the spirit and scope defined by the appended claims. Therefore, all changes and modifications falling within the scope of the claims or their equivalents should be covered by the appended claims.

## Claims

1. A valve structure, comprising a valve body, a valve core, and a sealing ring, wherein the valve body has a valve chamber, the valve chamber has a valve port, the valve core is movably disposed in the valve chamber and configured to adjustably seal the valve port, the valve core is provided with a sealing groove in a circumferential direction, the sealing ring is at least partially disposed in the sealing groove, and a part of the sealing ring exposed out of the sealing groove is in sealing fit with the valve port; wherein a cavity is formed between the sealing groove and the sealing ring, a balance channel is provided in the valve core, one end of the balance channel is in communication with the cavity, and the other end is in communication with a space outside the valve core and in the valve body; wherein a direction of a force exerted on the part of the sealing ring exposed out of the sealing groove by a fluid is opposite to a direction of a force exerted on the sealing ring by the fluid at the cavity.

2. The valve structure according to claim 1, wherein the sealing groove has an upper groove wall, the cavity comprises a first cavity formed between the upper groove wall and an upper surface of the sealing ring, the balance channel comprises a first balance channel, and the first balance channel is in communication with the first cavity and an area of the valve chamber located above the sealing ring; the sealing groove has a lower groove wall, the cavity comprises a second cavity formed between the lower groove wall and a lower surface of the sealing ring, the balance channel comprises a second balance channel, and the second balance channel is in communication with the second cavity and an area of the valve chamber located below the sealing ring.

3. The valve structure according to claim 2, wherein in a radial direction of the valve body, a width of the upper groove wall is greater than a width of the lower groove wall, and a width of an opening of the first balance channel on the upper groove wall is greater than or equal to a width of an opening of the second balance channel on the lower groove wall.

4. The valve structure according to claim 1, wherein the sealing groove has an upper groove wall, the cavity comprises a first cavity formed between the upper groove wall and an upper surface of the sealing ring, the balance channel comprises a first balance channel, and the first balance channel is in communication with the first cavity and an area of the valve chamber located above the sealing ring.

5. The valve structure according to claim 4, wherein the valve core is provided with at least two first balance channels, and the at least two first balance channels are evenly spaced in the circumferential direction of the valve core.

6. The valve structure according to claim 4, wherein the first balance channel is a through hole.

7. The valve structure according to claim 4, wherein the first balance channel is a through groove, a plane where the upper groove wall is located is taken as a reference plane, and an orthographic projection of the through groove on the reference plane is arc-shaped.

8. The valve structure according to claim 4, wherein the upper surface of the sealing ring is provided with a first groove, and the first groove and the upper groove wall together form the first cavity.

9. The valve structure according to claim 8, wherein the upper surface of the sealing ring is provided with one first groove, the first groove is shaped as a closed circular ring, and each first balance channel is configured to overlap with the first groove.

10. The valve structure according to claim 1, wherein the sealing groove has a lower groove wall, the cavity comprises a second cavity formed between the lower groove wall and a lower surface of the sealing ring, the balance channel comprises a second balance channel, and the second balance channel is in communication with the second cavity and an area of the valve chamber located below the sealing ring.

11. The valve structure according to claim 10, wherein the lower groove wall is provided with at least two second balance channels, and the at least two second balance channels are evenly spaced in the circumferential direction of the valve core.

12. The valve structure according to claim 10, wherein the second balance channel is a through hole.

13. The valve structure according to claim 10, wherein the second balance channel is a through groove, a plane where the lower groove wall is located is taken as a reference plane, and an orthographic projection of the through groove on the reference plane is arc-shaped.

14. The valve structure according to claim 10, wherein the upper surface of the sealing ring is provided with a second groove, and the second groove and the lower groove wall together form the second cavity.

15. The valve structure according to claim 14, wherein the lower surface of the sealing ring is provided with one second groove, the second groove is shaped as a closed circular ring, and each second balance channel is configured to overlap with the second groove.

16. The valve structure according to claim 1, wherein the valve core comprises a piston and a pressing sleeve, the pressing sleeve is connected to a lower end of the piston, the piston is provided with a first boss in the circumferential direction, the pressing sleeve is provided with a second boss in the circumferential direction, and the first boss and the second boss are spaced apart in an axial direction; wherein a space between the first boss and the second boss forms the sealing groove, a lower surface of the first boss is an upper groove wall of the sealing groove, and an upper surface of the second boss is a lower groove wall of the sealing groove.

17. The valve structure according to claim 1, wherein the sealing groove has an upper groove wall and a lower groove wall spaced apart from each other, at least one of the upper groove wall or the lower groove wall is provided with a first positioning structure, and the first positioning structure is at least one of a protrusion or a groove; wherein the valve structure is configured to position the sealing ring by using the first positioning structure.

18. The valve structure according to claim 17, wherein the first positioning structure comprises a plurality of positioning portions, and the plurality of positioning portions belonging to a same first positioning structure are spaced apart along a circular path.

19. The valve structure according to claim 17, wherein the upper groove wall is provided with at least two first positioning structures, and the at least two first positioning structures are spaced apart in a radial direction on the upper groove wall.

20. The valve structure according to claim 17, wherein the lower groove wall is provided with at least two first positioning structures, and the at least two first positioning structures are spaced apart in a radial direction on the lower groove wall.

21. The valve structure according to any one of claims 17-20, wherein the valve core comprises a piston and a pressing sleeve, the pressing sleeve is sleeved over an end of the piston in an axial direction, and the piston and the pressing sleeve together form the sealing groove.

22. The valve structure according to claim 21, wherein the piston forms the upper groove wall, the pressing sleeve forms the lower groove wall and a groove bottom of the sealing groove, an inner circumference of the piston is provided with a step structure at an end facing the pressing sleeve, the step structure and the pressing sleeve together form a groove, and the groove is the first positioning structure.

23. The valve structure according to claim 21, wherein the piston forms the upper groove wall and a groove bottom of the sealing groove, the pressing sleeve forms the lower groove wall, the piston is provided with a groove at a position where the upper groove wall abuts the groove bottom, and the groove is the first positioning structure.

24. The valve structure according to any one of claims 17-20, wherein the sealing ring has a first surface abutting against the upper groove wall and a second surface abutting against the lower groove wall, at least one of the first surface or the second surface is provided with a second positioning structure, the second positioning structure is at least one of a groove or a protrusion, and the second positioning structure and the first positioning structure are arranged correspondingly in position and are in limiting fit.

25. The valve structure according to claim 1, wherein the valve structure further comprises: a valve housing having an accommodating chamber and a valve port; a nut sleeve disposed in the accommodating chamber and fixedly connected to the valve housing; a screw passing through the nut sleeve and connected to the nut sleeve, the screw driving the valve core to block or open the valve port; and a valve needle spring disposed between the valve core and the nut sleeve, the valve needle spring being a tower-shaped structure.

26. The valve structure according to claim 25, wherein the valve needle spring comprises a plurality of coils connected to each other and coaxially arranged, and wire diameters of the plurality of coils are identical; and a height of the valve needle spring when compressed to its limit is equal to a wire diameter of one of the coils.

27. The valve structure according to claim 25, wherein the valve housing comprises a valve body and a valve cover connected to each other, and the nut sleeve is located in the valve cover and connected to the valve body; the valve core comprises a body, and a first end of the valve needle spring abuts against the body; a guiding ring is provided at a top of the valve body; the guiding ring has a radial segment, the radial segment is located between the nut sleeve and the valve core, and a second end of the valve needle spring abuts against the radial segment.

28. The valve structure according to claim 27, wherein the radial segment is provided with a first sub-through hole, and the first sub-through hole communicates an inner chamber of the valve housing with an inner chamber of the valve body.

29. The valve structure according to claim 27, wherein a connecting protrusion is provided at an end of the body facing the nut sleeve, and the first end of the valve needle spring is sleeved outside the connecting protrusion and abuts against the body.

30. The valve structure according to claim 29, wherein the valve core comprises a spring sleeve connected to the connecting protrusion, the guiding ring further comprises an axial segment, the spring sleeve is in guiding fit with the axial segment of the guiding ring, and the valve needle spring is sleeved outside the spring sleeve.

31. The valve structure according to any one of claims 27-30, wherein a diameter of the second end of the valve needle spring is greater than a diameter of the first end of the valve needle spring.

32. The valve structure according to claim 27, wherein an outer wall of the body is provided with an annular sealing ring, and the body is in sealing and movable fit with the valve body through the annular sealing ring.

33. The valve structure according to claim 30, wherein the body has a channel in communication with the valve port, and the channel is in communication with an inner chamber of the valve body where the valve needle spring is located.

34. The valve structure according to claim 33, wherein the spring sleeve is provided with a second sub-through hole, and the channel of the body is in communication with the inner chamber of the valve body where the valve needle spring is located through the second sub-through hole.

35. The valve structure according to claim 1, further comprising: a valve housing provided with an accommodating chamber and a valve port; a nut sleeve disposed in the accommodating chamber; a screw passing through the nut sleeve and in threaded connection with the nut sleeve, the valve core being connected to the screw and disposed corresponding to the valve port, and the screw driving the valve core to block or open the valve port; an accommodating structure disposed on a side of the valve core close to the nut sleeve; and a valve needle spring disposed between the valve core and the nut sleeve and at least partially accommodated in the accommodating structure.

36. The valve structure according to claim 35, wherein the accommodating structure is a first accommodating groove disposed at an end of the valve core facing the nut sleeve.

37. The valve structure according to claim 36, wherein the first accommodating groove comprises a guiding portion and an accommodating portion, the guiding portion is a trumpet-shaped structure, a large opening end of the guiding portion is disposed towards the nut sleeve, and a small opening end of the guiding portion is in communication with the accommodating portion.

38. The valve structure according to claim 36, wherein a positioning column is provided at the end of the valve core facing the nut sleeve, the first accommodating groove is arranged around the positioning column, and the positioning column passes through the valve needle spring.

39. The valve structure according to claim 35, wherein the valve housing comprises a valve cover and a valve body that are connected to each other, the nut sleeve located in the valve cover is connected to the valve body, a guiding ring is provided at a top of the valve body, and the guiding ring comprises a radial segment; and wherein two ends of the valve needle spring abut against the radial segment of the guiding ring and the valve core, respectively.

40. The valve structure according to claim 35, wherein an end of the valve needle spring away from the valve core abuts against the nut sleeve.

41. The valve structure according to claim 39, wherein the guiding ring further comprises an axial segment, and at least a part of the axial segment is located in the nut sleeve.

42. The valve structure according to claim 41, wherein the valve core comprises a body and a spring sleeve, the body comprises a connecting end and a blocking end disposed opposite to each other, the accommodating structure is disposed at the connecting end, and the blocking end blocks the valve port; the connecting end is provided with a positioning column, the positioning column is connected to the spring sleeve, and the valve needle spring is sleeved outside the spring sleeve and the positioning column; and the spring sleeve is in guiding fit with the axial segment of the guiding ring.

43. The valve structure according to claim 42, wherein the valve core is further provided with a limiting protrusion, and a gap between the limiting protrusion and the positioning column forms the first accommodating groove.
